# EUROPÄISCHE PATENTSCHRIFT

(11) **EP 0 823 921 B1**
(45) Veröffentlichungstag und Bekanntmachung des Hinweises auf die Patenterteilung: **24.09.2003**
(21) Anmeldenummer: 96914965.7
(22) Anmeldetag: 20.04.1996
(51) Int. Cl.: C08F 283/06, C08F 8/12, D21H 17/34, D21H 21/18, D21H 21/10, D21H 21/16, C08B 31/12

(54) **PFROPFPOLYMERISATE AUS ALKYLENOXIDEINHEITEN ENTHALTENDEN POLYMERISATEN UND ETHYLENISCH UNGESÄTTIGTEN VERBINDUNGEN, VERFAHREN ZU IHRER HERSTELLUNG UND IHRE VERWENDUNG**
GRAFT POLYMERS MADE FROM ALKYLENE OXIDE UNITS-CONTAINING POLYMERS AND ETHYLENICALLY UNSATURATED COMPOUNDS, PROCESS FOR THEIR PREPARATION AND THEIR USE
POLYMERES GREFFES CONSTITUES DE POLYMERES CONTENANT DES UNITES D'OXYDE D'ALKYLENE ET DE COMPOSES ETHYLENIQUEMENT INSATURES, LEUR PROCEDE DE PREPARATION ET LEUR UTILISATION

(30) Priorität: 02.05.1995 DE 19515943
(43) Veröffentlichungstag der Anmeldung: 18.02.1998
(73) Patentinhaber: BASF AKTIENGESELLSCHAFT, 67056 Ludwigshafen (DE)
(72) Erfinder: DENZINGER, Walter, D-67346 Speyer (DE); RÜBENACKER, Martin, D-67122 Altrip (DE); NILZ, Claudia, D-67127 Rödersheim-Gronau (DE); LORENCAK, Primoz, D-67069 Ludwigshafen (DE); MÖNCH, Dietmar, D-69469 Weinheim (DE); SCHUHMACHER, Rudolf, D-67459 Böhl-Iggelheim (DE); STANGE, Andreas, D-68199 Mannheim (DE)
(86) Internationale Anmeldenummer: EP9601663
(87) Internationale Veröffentlichungsnummer: WO96034903

(56) Entgegenhaltungen:
- EP-A- 0 301 372
- EP-A- 0 363 319
- WO-A-95/32227
- US-A- 5 334 287

## Beschreibung

Die Erfindung betrifft Pfropfpolymerisate aus Alkylenoxideinheiten enthaltenden Polymerisaten und offenkettigen N-Vinylcarbonsäureamiden, Verfahren zu ihrer Herstellung und die Verwendung der Pfropfpolymerisate bei der Herstellung von Papier, Pappe und Karton, als Dispergiermittel für Pigmente und als Stärkekationisierungsmittel.

Aus der US-A-4 880 497 und der US-A-4 978 427 ist jeweils die Herstellung von Papier mit hoher Trockenfestigkeit und Naßfestigkeit bekannt, wobei man entweder auf die Oberfläche des Papiers oder zum Papierstoff vor der Blattbildung ein hydrolysiertes Copolymerisat als Verfestigungsmittel verwendet, das durch Copolymerisation von N-Vinylformamid und ethylenisch ungesättigten Monomeren, wie beispielsweise Vinylacetat, Vinylpropionat oder Alkylvinylether und Hydrolysieren von 30 bis 100 mol-% der Formylgruppen des Copolymerisats unter Bildung von Aminogruppen erhältlich ist. Die hydrolysierten Copolymeren werden in Mengen von 0,1 bis 5 Gew.-%, bezogen auf trockene Fasern, eingesetzt.

Aus der EP-A-0 363 319 sind Pfropfpolymerisate bekannt, die durch radikalische Polymerisation von gegebenenfalls N-substituiertem Acrylamid oder Methacrylamid und N-vinylsubstituierten Amiden oder Vinylestern einer gesättigten aliphatischen Monocarbonsäure in Gegenwart von Anlagerungsprodukten von Alkylenoxiden an einen mindestens 3-wertigen aliphatischen Alkohol mit 3 bis 10 Kohlenstoffatomen erhältlich sind. Die Pfropfpolymerisate werden beim Färben von Cellulosefasern mit substantiven Farbstoffen oder Reaktivfarbstoffen als Färbehilfsmittel verwendet.

Aus der US-A-5 334 287 sind Pfropfpolymerisate bekannt, die durch radikalisch initiierte Polymerisation von N-Vinylcarbonsäureamiden, vorzugsweise N-Vinylformamid, und gegebenenfalls anderen Monomeren in Gegenwart von Monosacchariden, Oligosacchariden, Polysacchariden oder jeweils deren Derivaten und gegebenenfalls Hydrolyse der einpolymerisierten Gruppe N-Vinylcarbonsäureamide unter Bildung von Vinylamineinheiten erhältlich sind. Die Pfropfpolymerisate werden als Trocken- und Naßverfestigungsmittel bei der Herstellung von Papier, Pappe und Karton verwendet.

Der vorliegenden Erfindung liegt die Aufgabe zugrunde, neue Stoffe zur Verfügung zu stellen. Eine weitere Aufgabe besteht darin, Prozeßhilfsmittel für die Herstellung von Papier, Pappe und Karton zur Verfügung zu stellen.

Die Aufgabe wird erfindungsgemäß gelöst mit Pfropfpolymerisaten aus Alkylenoxideinheiten enthaltenden Polymerisaten und ethylenisch ungesättigten Verbindungen, wobei die Pfropfpolymerisate erhältlich sind durch radikalisch initiierte Polymerisation von
(A) Monomeren oder Monomergemischen aus
   (a) 10 bis 100 Gew.-% N-Vinylcarbonsäureamiden der Formel 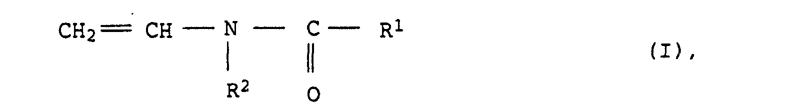 in der R¹, R²=H und C₁- bis C₆-Alkyl bedeuten,
   (b) 0 bis 90 Gew.-% anderen, mit den Monomeren (a) copolymerisierbaren monoethylenisch ungesättigten Monomeren und
   (c) 0 bis 5 Gew.-% mindestens zwei ethylenisch ungesättigten, nicht konjugierte Doppelbindungen im Molekül aufweisenden Monomeren
   in Gegenwart von
(B) Homo- oder Copolymerisaten von C₂- bis C₄-Alkylenoxiden, wobei die Polymerisate mindestens 3 Einheiten eines C₂- bis C₄-Alkylenoxids enthalten, und/oder Polytetrahydrofuranen im Gewichtsverhältnis (A) : (B) von (95 bis 10) : (5 bis 90) und anschließende zumindest teilweise Abspaltung der Gruppierung 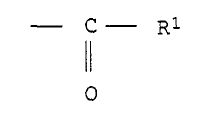 aus den einpolymerisierten Monomeren (a) des Pfropfpolymerisats unter Bildung von Einheiten der Formel 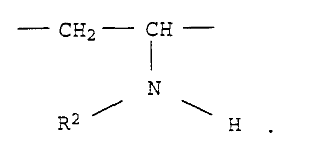 Gegenstand der Erfindung ist außerdem ein Verfahren zur Herstellung von Pfropfpolymerisaten aus Alkylenoxideinheiten enthaltenden Polymerisaten und ethylenisch ungesättigten Verbindungen, das dadurch gekennzeichnet ist, daß man

(A) Monomere oder Monomergemische aus
   (a) 10 bis 100 Gew.-% N-Vinylcarbonsäureamiden der Formel 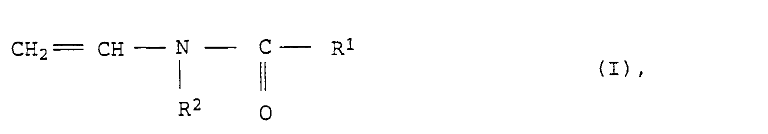 in der R¹, R²=H und C₁- bis C₆-Alkyl bedeuten,
   (b) 0 bis 90 Gew.-% anderen, mit den Monomeren (a) copolymerisierbaren carboxylgruppenfreien monoethylenisch ungesättigten Monomeren und
   (c) 0 bis 5 Gew.-% mindestens zwei ethylenisch ungesättigten, nicht konjugierte Doppelbindungen im Molekül aufweisenden Monomeren
   in Gegenwart von
(B) Homo - oder Copolymerisaten von C₂- bis C₄-Alkylenoxiden, wobei die Polymerisate mindestens 3 Einheiten eines C₂- bis C₄-Alkylenoxids enthalten, und/oder Polytetrahydrofuranen
im Gewichtsverhältnis (A):B) von (95 bis 10):(5 bis 90) radikalisch polymerisiert durch Suspensions- oder Lösungspolymerisation der Komponenten (A) und (B) in wäßrigem Medium und anschließend die Gruppierung 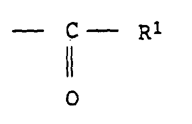 aus den einpolymerisierten Monomeren (a) des Pfropfpolymerisats zumindest teilweise unter Bildung von Einheiten der Formel 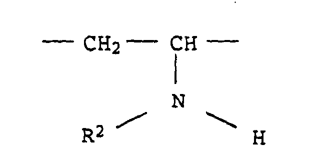 abspaltet.

Als Monomer (A) wird vorzugsweise N-Vinylformamid eingesetzt. Aus den so erhältlichen Pfropfpolymerisaten werden in einem weiteren Verfahrensschritt 2 bis 100, vorzugsweise 30 bis 95 % der Formylgruppen des einpolymerisierten N-vinylformamids unter Bildung von Einheiten der Formel 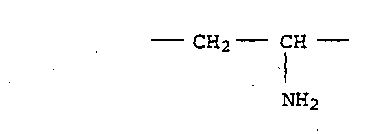 abgespalten. Bevorzugt eingesetzte Monomergemische bestehen aus 1 bis 99 Gew.-% N-Vinylformamid und 99 bis 1 Gew.-% Vinylformiat, Vinylacetat, Vinylpropionat, Acrylnitril, N-Vinylpyrrolidon, N-Vinylcaprolactam, Acrylsäure oder Mischungen der genannten Monomeren. Aus den so erhältlichen Pfropfpolymerisaten werden 1 bis 100, vorzugsweise 30 bis 95 % der Formylgruppen des einpolymerisierten N-Vinylformamids abgespalten. Je nach Hydrolysebedingungen können auch die einpolymerisierten Comonomeren chemisch verändert werden, z.B. entstehen aus den einpolymerisierten Vinylestern Vinylalkoholeinheiten. Die so erhältlichen hydrolysierten Pfropfpolymerisate werden als Trocken- und Naßverfestigungsmittel für Papier, Pappe und Karton verwendet.

Zur Herstellung der Pfropfpolymerisate kommen als Monomere N-Vinylcarbonsäureamide der Formel 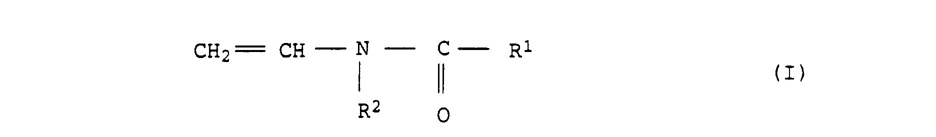 in Betracht, in der R¹ und R² gleich oder verschieden sein können und für Wasserstoff und C₁- bis C₆-Alkyl stehen. Geeignete Monomere sind beispielsweise N-Vinylformamid (R¹=R²=H in Formel I) N-Vinyl-N-Methylformamid, N-Vinylacetamid, N-Vinyl-N-Methylacetamid, N-Vinyl-N-Ethylacetamid, N-Vinyl-N-Methylpropionamid und N-Vinylpropionamid. Zur Herstellung der Pfropfpolymerisate können die genannten Monomeren entweder allein oder in Mischung untereinander eingesetzt werden. Vorzugsweise verwendet man aus dieser Gruppe von Monomeren N-Vinylformamid.

Die oben genannten N-Vinylcarbonsäureamide können gegebenenfalls mit anderen, damit copolymerisierbaren monomethylenisch ungesättigten Monomeren bei der Pfropfpolymerisation eingesetzt werden. Geeignete Monomere der Gruppe (b) sind beispielsweise Vinylester von gesättigten Carbonsäuren mit 1 bis 6 Kohlenstoffatomen, z.B. Vinylformiat, Vinylacetat, Vinylpropionat und Vinylbutyrat. Außerdem eignen sich die Ester, Amide und Nitrile von monoethylenisch ungesättigten C₃- bis C₆-Carbonsäuren. Geeignete Amide sind beispielsweise Acrylamid, Methacrylamid sowie N-Alkylmono- und -diamide mit Alkylresten von 1 bis 6 C-Atomen wie z.B. N-Methylacrylamid, N,N-Dimethylacrylamid, N-Methylmethacrylamid, N-Ethylacrylamid, N-Propylacrylamid und tert. Butylacrylamid sowie deren basischen (Meth)-acrylamide, wie z.B. Dimethylaminoethylacrylamid, Dimethylaminoethylmethacrylamid, Diethylaminoethylacrylamid, Diethylaminoethylmethacrylamid, Dimethylaminopropylacrylamid, Diethyl-aminopropylacrylamid, Dimethylaminopropylmethacrylamid und Diethylaminopropylmethacrylamid. Auch die Ester der monoethylenisch ungesättigten Carbonsäuren mit C₁-bis C₆-Alkoholen wie z.B. Methylacrylat, Methylmethacrylat, Ethylacrylat und Ethylmethacrylat oder mit Glykolen bzw. Polyglykolen, wobei jeweils nur eine OH-Gruppe der Glykole und Polyglykole mit einer ethylenisch ungesättigten Carbonsäure verestert ist wie z.B. Hydroxiethylacrylat, Hydroxiethylmethacrylat, Hydroxipropylacrylate, Hydroxibutylacrylate, Hydroxipropylmethacrylate, Hydroxibutylmethacrylate sowie die Acrylsäuremonoester von Polyalkylenglykolen eines Molgewichts von 1500 bis 10 000. Weiterhin geeignet sind die Ester von ethylenisch ungesättigten Carbonsäuren mit Aminoalkoholen wie z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylaminopropylacrylat, Diethylaminopropylmethacrylat, Dimethylaminobutylacrylat, Diethylaminobutylacrylat, Dimethylaminopentylacrylat, Dimethylaminoneopentylmethacrylat und Dimethylaminohexylacrylat. Die basischen Acrylate und Acrylamide werden in Form der freien Basen, der Salze mit Mineralsäuren wie z.B. Salzsäure, Schwefelsäure und Salpetersäure oder in quaternisierter Form eingesetzt. Geeignete Quaternisierungsmittel sind beispielsweise Dimethylsulfat, Methylchlorid, Ethylchlorid, Benzylchlorid oder Diethylsulfat. Geeignet sind auch monoethylenisch ungesättigte Mono- und Dicarbonsäuren(anhydride) mit 3 bis 6 Atomen wie z.B. Acrylsäure, Methacrylsäure, Crotonsäure, Maleinsäure(anhydrid), Fumarsäure, Itakonsäure(anhydrid) und Zitraconsäure(anhydrid).

Weiterhin sind als Monomere der Gruppe (b) geeignet N-Vinylpyrrolidon, N-Vinylcaprolactam, Acrylnitril, Methacrylnitril, N-Vinylimidazol sowie substituierte N-Vinylimidazole wie z.B. N-Vinyl-2-methylimidazol, N-Vinyl-4-methylimidazol, N-Vinyl-5-methylimidazol, N-Vinyl-2-ethylimidazol und N-Vinylimidazoline wie z.B. N-Vinylimidazolin, N-Vinyl-2-methylimidazolin und N-Vinyl-2-ethylimidazolin. N-Vinylimidazole und N-Vinylimidazoline werden außer in Form der freien Basen auch in mit Mineralsäuren neutralisierter oder in quaternisierter Form eingesetzt, wobei die Quaternisierung vorzugsweise mit Dimethylsulfat, Diethylsulfat, Benzylchlorid, Methylchlorid oder Ethylchlorid vorgenommen wird.

Außerdem eignen sich als Monomere (b) Sulfogruppen enthaltende Monomere wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester und 2-Acrylamido-2-methylpropansulfonsäure. Die Säuregruppen aufweisenden Verbindungen können in Form der freien Säuren, der Ammonium-, Alkalimetall- und Erdalkalimetallsalze bei der Pfropfpolymerisation eingesetzt werden.

Von den Monomeren (b) werden Vinylformiat, Vinylacetat, Vinylpropionat, Acrylnitril, N-Vinylpyrrolidon, N-Vinylcaprolactam und Acrylsäure bevorzugt.

Bei der Herstellung der Pfropfpolymerisate werden Monomergemische aus 10 bis 100 Gew.-% mindestens eines Monomer der Gruppe (a) und 0 bis 90 Gew.-% mindestens eines Monomer der Gruppe (b) eingesetzt.

Eine Modifizierung der Pfropfcopolymerisate kann dadurch erreicht werden, daß man die Monomeren (a) oder Monomermischungen aus (a) und (b) mit bis zu 5 Gew.% eines mindestens zwei ethylenisch ungesättigte nicht-konjugierte Doppelbindungen im Molekül aufweisenden Monomeren (c) in Gegenwart der Verbindungen (B) copolymerisiert. Die Verbindungen (c) werden üblicherweise bei Copolymerisationen als Vernetzer verwendet. Sie können in den zur Copolymerisation eingesetzten Monomermischungen aus (a) und gegebenenfalls (b) zugesetzt werden. Im Falle ihres Einsatzes beträgt die bevorzugt verwendete Menge 0,05 bis 2 Gew.%. Die Mitverwendung der Monomeren der Gruppe (c) während der Copolymerisation bewirkt eine Erhöhung der K-Werte der Copolymerisate. Geeignete Verbindungen dieser Art sind beispielsweise Methylenbisacrylamid, Ester von Acrylsäure und Methacrylsäure mit mehrwertigen Alkoholen, z.B. Glykoldiacrylat, Glycerintriacrylat, Glykoldimethacrylat, Glycerintrimethacrylat, sowie mindestens zweifach mit Acrylsäure oder Methacrylsäure veresterte Polyole, wie Pentaerythrit und Glucose. Geeignete Vernetzer sind außerdem Divinylbenzol, Divinyldioxan, Pentaerythrittriallylether und Pentaallylsucrose. Vorzugsweise verwendet man aus dieser Gruppe von Verbindungen wasserlösliche Monomere, wie Glykoldiacrylat oder Glykoldiacrylate von Polyethylenglykolen eines Molekulargewichts bis zu 3.000.

Die Polymerisation der Monomeren (a), sowie die der Monomeren (a) und (b) sowie gegebenenfalls jeweils noch zusätzlich (c) erfolgt erfindungsgemäß in Gegenwart von Alkylenoxideinheiten enthaltenden Polymerisaten. Derartige Produkte sind Polyalkylenoxide mit mindestens 3 Alkylenoxideinheiten oder Polytetrahydrofurane bestehend aus mindestens 3 Einheiten.

Alkylenoxideinheiten enthaltende Polymere und Polytetrahydrofurane sind bekannt. von besonderem Interesse sind die Homo- und Copolymerisate von C₂- bis C₄-Alkylenoxiden. Sie werden beispielsweise durch Homo- oder Copolymerisation von Ethylenoxid, Propylenoxid, n-Butylenoxid und/oder Isobutylenoxid hergestellt. Bei den Copolymerisaten kann es sich entweder um statistische Copolymerisate handeln, wenn man Mischungen aus mindestens 2 Alkylenoxiden polymerisiert oder um Blockcopolymerisate, wenn man zunächst ein Alkylenoxid, beispielsweise Ethylenoxid polymerisiert und dann ein anderes Alkylenoxid polymerisiert, z.B. Propylenoxid. Die Blockcopolymerisate können beispielsweise dem Typ AB, ABA oder BAB zugeordnet werden, wobei A beispielsweise ein Polyethylenoxidblock und B ein Block aus Polypropylenoxid bedeutet. Diese Copolymerisate können gegebenenfalls außerdem noch n-Butylenoxid und/oder Isobutylenoxid einpolymerisiert enthalten. Die Polyethylenoxide enthalten mindestens 3 Alkylenoxideinheiten im Molekül. Die Polyalkylenoxide können beispielsweise bis zu 50 000 Alkylenoxideinheiten im Molekül enthalten. Bevorzugt kommen solche Polyalkylenoxide in Betracht, die 3 bis 1 000 Alkylenoxideinheiten im Molekül aufweisen. Die Polytetrahydrofurane enthalten beispielsweise 3 bis 200, vorzugsweise 3 bis 100 Tetramethylenoxideinheiten.

Bevorzugt zum Einsatz gelangende Verbindungen sind Homo- oder Blockcopolymerisate von Ethylenoxid und Propylenoxid sowie statistisch aufgebaute Copolymerisate aus Ethylenoxid und Propylenoxid, die durch Copolymerisieren eines Mischgases aus Ethylenoxid und Propylenoxid erhältlich sind. Unter Alkylenoxideinheiten enthaltenden Polymerisaten sollen im Sinne der vorliegenden Erfindung auch Additionsprodukte von C₂- bis C₄-Alkylenoxiden an Alkohole, Phenole, Carbonsäuren und Amine verstanden werden.

Für die Umsetzung mit den Alkylenoxiden in Betracht kommenden Alkohole haben beispielsweise 1 bis 30 Kohlenstoffatome, wie Methanol, Ethanol, n-Propanol, iso-Propanol, n-Butanol, n-Octanol, 2-Ethylhexanol, Decanol, Dodecanol, Palmitylalkohol, Cetylalkohol und Stearylalkohol. Von technischem Interesse sind insbesondere die nach dem Oxoverfahren erhältlichen Alkohole, z.B. C₁₀-Alkohole, C₁₃-Oxoalkohole oder native Alkohole wie C₁₀/C₁₈-Talgfettalkohole.

Außer den genannten einwertigen Alkoholen kann man selbstverständlich auch 2- und mehrwertige Alkohole einsetzen, z.B. Glykol, Glycerin, Erythrit, Pentaerythrit und Sorbit. Die Alkohole werden im Molverhältnis 1:3 bis 1:200 mit mindestens einem C₂- bis C₄-Alkylenoxid umgesetzt.

Weitere geeignete Alkylenoxideinheiten enthaltende Polymere sind Umsetzungsprodukte von Fettsäuren mit Alkylenoxiden. Von den Fettsäuren kommen insbesondere solche in Betracht, die 8 bis 10 C-Atome im Molekül enthalten, beispielsweise Laurinsäure, Myristinsäure, Stearinsäure, Palmitinsäure, Kokosfettsäure, Talgfettsäure und Ölsäure.

Ethylenoxideinheiten enthaltende Polymere im Sinne der vorliegenden Erfindung sind außerdem die Additionsprodukte von C₂- bis C₄-Alkylenoxiden an C₁- bis C₁₂-Alkylphenole, wie n-Decylphenol, n-Octylphenol, Isobutylphenol und Methylphenol. Außerdem eignen sich als Komponente (B) für die Herstellung der Pfropfpolymerisate die Anlagerungsprodukte von C₂- bis C₄-Alkylenoxiden an sekundäre C₂- bis C₃₀-Amine wie Di-n-Butylamin, Di-n-Octylamin, Dimethylamin und Distearylamin. Das Molverhältnis von Amin zu mindestens einem Alkylenoxid beträgt 1:3 bis 1:200 und liegt vorzugsweise in dem Bereich von 1:3 bis 100. Bei den Additionsprodukten von Alkylenoxiden an Alkohole, Phenole, Säuren oder Amine kann man die Alkylenoxide in Form eines Mischgases an die vorstehend genannten Verbindungen addieren oder man führt die Umsetzung zunächst mit Ethylenoxid und anschließend mit Propylenoxid durch. Ebenso ist es möglich, zunächst Propylenoxid und anschließend Ethylenoxid an die genannten Verbindungen zu addieren. Außer Ethylenoxid und Propylenoxid kann man jeweils gegebenenfalls noch Isobutylenoxid und/oder n-Butylenoxid addieren. Bei der nacheinander erfolgenden Addition der Alkylenoxide entstehen Blockcopolymerisate. In manchen Fällen kann außerdem noch von Vorteil sein, die freien OH-Gruppen der Alkoxylierungsprodukte mit einer Endgruppe zu verschließen. Der Endgruppenverschluß kann beispielsweise mit einem Alkylrest unter Ausbildung einer Ethergruppe erfolgen. Beispielsweise kann man die Alkoxylierungsprodukte mit Alkylierungsmitteln wie Dimethylsulfat umsetzen. Die endständigen OH-Gruppen können gegebenenfalls auch durch Umsetzung mit Carbonsäuren, z.B. Essigsäure oder Stearinsäure, verestert werden.

Zur Herstellung der Pfropfpolymerisate werden die Monomeren (a), Mischungen aus (a) und (b) und gegebenenfalls jeweils zusätzlich (c) in Gegenwart von Verbindungen der Komponente (B) radikalisch polymerisiert. In einigen Fällen kann es für die Wirkung des entstehenden Polymerisates günstig sein, zwei oder mehrere der unter (B) angegebenen Verbindungen einzusetzen. Die Pfropfpolymerisation kann in Gegenwart oder auch in Abwesenheit von inerten Lösemitteln oder inerten Verdünnungsmitteln durchgeführt werden. Da die Polymerisation in Abwesenheit von inerten Löse- oder Verdünnungsmitteln meistens zu uneinheitlichen Polymerisaten führt, ist die Polymerisation in einem inerten Löse- oder Verdünnungsmittel bevorzugt. Geeignet sind beispielsweise solche inerten Verdünnungsmittel, in denen die unter (B) angegebenen Verbindungen suspendiert werden können und die die Monomeren (A) lösen. In diesen Fällen liegen die Polymerisate nach der Copolymerisation in suspendierter Form vor und können leicht durch Filtration in fester Form isoliert werden. Geeignete inerte Verdünnungsmittel sind beispielsweise Toluol, Xylol, o-, m-, p-Xylol und Isomerengemische, Ethylbenzol, aliphatische Kohlenwasserstoffe, wie Pentan, Hexan, Heptan, Octan, Nonan, Dodecan, Cyclohexan, Cyclooctan, Methylcyclohexan sowie Mischungen der genannten Kohlenwasserstoffe oder Benzinfraktionen, die keine polymerisierbaren Monomeren enthalten. Außerdem eignen sich Chlorkohlenwasserstoffe wie Chloroform, Tetrachlorkohlenstoff, Hexachlorethan, Dichlorethan und Tetrachlorethan. Bei der oben beschriebenen Arbeitsweise, bei der die Verbindungen der Komponente (B) in einem inerten Verdünnungsmittel suspendiert sind, setzt man vorzugsweise wasserfreie Verbindungen der Komponente (B) ein.

Eine bevorzugte Art der Herstellung der Polymerisate ist die Lösungspolymerisation, wobei die Verbindungen der Komponente (B), die Monomeren (A) und das gebildete Polymerisat zumindest dispergiert, vorzugsweise in gelöster Form vorliegen. Für die Lösungspolymerisation eignen sich beispielsweise inerte Lösemittel, wie Methanol, Ethanol, Isopropanol, n-Propanol, n-Butanol, sek.-Butanol, Tetrahydrofuran, Dioxan, Wasser sowie Mischungen der genannten inerten Lösemittel. Die Polymerisation kann kontinuierlich oder diskontinuierlich durchgeführt werden.

Die Pfropfpolymerisate werden im allgemeinen unter Mitverwendung von radikalbildenden Initiatoren hergestellt.

Als radikalbildende Initiatoren sind vorzugsweise alle diejenigen Verbindungen geeignet, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation einzusetzen und dann die Hauptpolymerisation mit einem Initiator zu Ende zu führen, der bei höherer Temperatur zerfällt. Man kann wasserlösliche sowie wasserunlösliche Initiatoren oder Mischungen von wasserlöslichen und wasserunlöslichen Initiatoren einsetzen. Die in Wasser unlöslichen Initiatoren sind dann in der organischen Phase löslich. Für die im folgenden angegebenen Temperaturbereiche kann man beispielsweise die dafür aufgeführten Initiatoren verwenden.

Temperatur: 40 bis 60°C:
Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2'-Azobis-(4-methoxy-2,4-dimethylvaleronitril), 2,2'-Azobis-(2- methyl-N-phenylpropionamidin)dihydrochlorid, 2,2'-Azobis-(2-methylpropion-amidin)dihydrochlorid.

Temperatur: 60 bis 80°C:
tert.-Butylperpivalat, Dioctanoylperoxid, Dilauroylperoxid, 2,2'-Azobis-(2,4-dimethylvaleronitril).

Temperatur: 80 bis 100°C:
Dibenzoylperoxid, tert.-Butylper-2-ethylhexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat.

Temperatur: 100 bis 120°C:
Bis-(tert.-butylperoxid)-cyclohexan, tert.-Butylperoxiisopropylcarbonat, tert.-Butylperacetat, Wasserstoffperoxid.

Temperatur: 120 bis 140°C:
2,2-Bis-(tert.-butylperoxi)-butan, Dicumylperoxid, Ditert.-amylperoxid, Di-tert.-butylperoxid.

Temperatur: >140°C
p-Menthanhydroperoxid, Pinanhydroperoxid, Cumolhydroperoxid und tert.-Butylhydroperoxid.

Verwendet man zusätzlich zu den genannten Initiatoren noch Salze oder Komplexe von Schwermetallen, z.B. Kupfer-, Kobalt-, Mangan-, Eisen-, Vanadium-, Nickel- und Chromsalze oder organische Verbindungen, wie Benzoin, Dimethylanilin oder Ascorbinsäure, so können die Halbwertszeiten der angegebenen radikalbildenden Initiatoren verringert werden. So kann man beispielsweise tert.-Butylhydroperoxid unter Zusatz von 5 ppm Kupfer-II-acetylacetonat bereits so aktivieren, daß bereits bei 100°C polymerisiert werden kann. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Bezogen auf die bei der Polymerisation eingesetzten Monomeren verwendet man 0,01 bis 20, vorzugsweise 0,05 bis 10 Gew.-% eines Polymerisationsinitiators oder einer Mischung mehrerer Polymerisationsinitiatoren. Als Redoxkomponenten setzt man 0,01 bis 15 % der reduzierend wirkenden Verbindungen zu. Schwermetalle werden im Bereich von 0,1 bis 100 ppm, vorzugsweise 0,5 bis 10 ppm eingesetzt. Oft ist es von Vorteil, eine Kombination aus Peroxid, Reduktionsmittel und Schwermetall als Redoxkatalysator einzusetzen.

Die Pfropfpolymerisation der wesentlichen Monomeren (a) und gegebenenfalls (b) und der gegebenenfalls mitzuverwendenden Monomeren (c) kann auch durch Einwirkung von ultravioletter Strahlung, gegebenenfalls in Gegenwart von UV-Initiatoren, durchgeführt werden. Für das Polymerisieren unter Einwirkung von UV-Strahlen setzt man die dafür üblicherweise in Betracht kommenden Fotoinitiatoren bzw. Sensibilisatoren ein. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzyldiketale können verwendet werden. Als UV-Strahlungsquellen dienen beispielsweise neben energiereichen UV-Lampen, wie Kohlenbogenlampen, Quecksilberdampflampen oder Xenonlampen auch UV-arme Lichtquellen, wie Leuchtstoffröhren mit hohem Blauanteil.

Um Polymerisate mit niedrigem K-Wert herzustellen, wird die Polymerisation zweckmäßigerweise in Gegenwart von Reglern durchgeführt. Geeignete Regler sind beispielsweise Schwefel in gebundener Form enthaltende organische Verbindungen. Hierzu gehören beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydrazinsulfat und Butenole. Falls die Polymerisation in Gegenwart von Reglern durchgeführt wird, benötigt man davon 0,05 bis 20 Gew.-%, bezogen auf die bei der Polymerisation eingesetzten Monomeren.

Die Pfropfpolymerisation der Komponenten (A) und (B) erfolgt üblicherweise in einer Inertgasatmosphäre unter Ausschluß von Luftsauerstoff. Während der Polymerisation wird im allgemeinen für eine gute Durchmischung der Reaktionsteilnehmer gesorgt. Bei kleineren Ansätzen, bei denen eine sichere Abführung der Polymerisationswärme gewährleistet ist, kann man die Reaktionsteilnehmer, die vorzugsweise in einem inerten Verdünnungsmittel vorliegen, diskontinuierlich copolymerisieren, indem man das Reaktionsgemisch auf die Polymerisationstemperatur erhitzt und dann die Reaktion ablaufen läßt. Diese Temperaturen liegen dabei im Bereich von 40 bis 180°C. Um den Verlauf der Polymerisationsreaktion besser kontrollieren zu können, gibt man die Monomeren (A) bei der gewünschten Polymerisationstemperatur dem polymerisierenden Gemisch kontinuierlich oder absatzweise in dem Maße zu, daß die Polymerisation in dem gewünschten Temperaturbereich gut kontrollierbar ist. Bevorzugt ist eine Art der Zugabe der Monomeren der Komponente (A) bei der man im Polymerisationsreaktor zunächst die Verbindungen der Komponente (B) oder zumindest einen Teil der Verbindungen der Komponente (B) im Reaktor vorlegt und darin unter Rühren auf die gewünschte Polymerisationstemperatur erhitzt. Sobald diese Temperatur erreicht ist, fügt man dazu über einen Zeitraum von etwa 1 bis 10, vorzugsweise 2 bis 8 Stunden, die Monomeren (a und gegebenenfalls b) und gegebenenfalls (c) sowie den Initiator und gegebenenfalls einen Regler zu. Eine derartige Vorgehensweise wird beispielsweise beim Polymerisieren der Komponenten (A) und (B) in einem inerten Verdünnungsmittel, in dem die Komponente (B) suspendiert ist sowie auch bei der in Lösung durchgeführten Polymerisation angewendet.

Die erfindungsgemäßen Pfropfpolymerisate werden durch Suspensions- oder Lösungspolymerisation der Komponenten (A) und (B) in wäßrigem Medium hergestellt, wobei die Lösungspolymerisation in Wasser besonders bevorzugt ist. Bei der Lösungspolymerisation in wäßrigem Medium geht man beispielsweise so vor, daß man mindestens einen Teil der Verbindungen der Komponente (B) in wäßrigem Medium vorlegt und die Monomeren (a und gegebenenfalls b) sowie gegebenenfalls die Monomeren (c) kontinuierlich oder absatzweise dem polymerisierenden Reaktionsgemisch zufügt. Um eine Verseifung der monomeren N-Vinylcarbonsäureamide während der Polymerisation in wäßriger Lösung zu vermeiden, führt man die Polymerisation vorzugsweise in einem pH-Wert-Bereich von 4 bis 9, insbesondere von 5 bis 8 durch. In vielen Fällen empfiehlt es sich, zusätzlich noch in Gegenwart von Puffern zu arbeiten, z.B. zur wäßrigen Phase primäres oder sekundäres Natriumphosphat zuzusetzen. Bei Einsatz von säuregruppenhaltigen Monomeren (b) werden diese in Form der Salze eingesetzt.

Bei der Pfropfpolymerisation liegen die Temperaturen üblicherweise in dem Bereich von 40 bis 180, vorzugsweise 50 bis 150°C und insbesondere bei 60 bis 110°C. Sobald die Temperatur bei der Pfropfpolymerisation oberhalb der Siedepunkte des inerten Verdünnungs- oder Lösemittels oder der Monomeren liegt, wird die Polymerisation unter Druck durchgeführt. Die Konzentration der Komponenten (A) und (B) beträgt bei der Pfropfpolymerisation in Gegenwart von inerten Löse- oder inerten Verdünnungsmitteln 10 bis 80, vorzugsweise 20 bis 70 Gew.%. Die Herstellung der Pfropfpolymerisate kann in den üblichen Polymerisationsvorrichtungen erfolgen. Hierzu verwendet man beispielsweise Rührkessel, die mit einem Anker-, Blatt-, Impeller- oder Mehrstufenimpulsgegenstromrührer ausgestattet sind. Insbesondere bei der Polymerisation in Abwesenheit von Verdünnungsmitteln kann es vorteilhaft sein, die Polymerisation in Knetern durchzuführen. Ebenso kann es notwendig sein, in einem Kneter zu polymerisieren, wenn man bei hohen Konzentrationen arbeitet.

Man erhält Pfropfpolymerisate, die, soweit sie in Wasser löslich sind, K-Werte von 8 bis 250, vorzugsweise 10 bis 150, haben (gemessen an 1 %igen wäßrigen Lösungen der Copolymerisate bei pH 7 und 25°C). Die nach den oben angegebenen Verfahren herstellbaren Pfropfpolymerisate sind farblose bis bräunlich gefärbte Produkte. Sie liegen beim Polymerisieren in wäßrigem Medium als Dispersionen oder Polymerlösungen vor. In Abhängigkeit von der jeweiligen Zusammensetzung der Pfropfpolymerisate handelt es sich dabei um niedrigviskose bis pastöse wäßrige Lösungen oder wäßrige Dispersionen.

An die Herstellung der Pfropfpolymerisate schließt sich eine zweite Verfahrensstufe an, in der unter Einwirkung von Säuren, Basen oder Enzymen eine Hydrolyse durchgeführt wird. Die Polymerisate enthalten zweckmäßig mindestens 10 Gew.-% an Einheiten der Formel 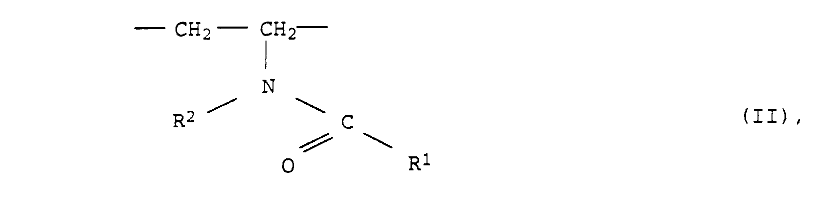 in der R¹, R² = H, C₁- bis C₆-Alkyl bedeuten. Die Einheiten II werden durch Hydrolyse in Einheiten der Formel 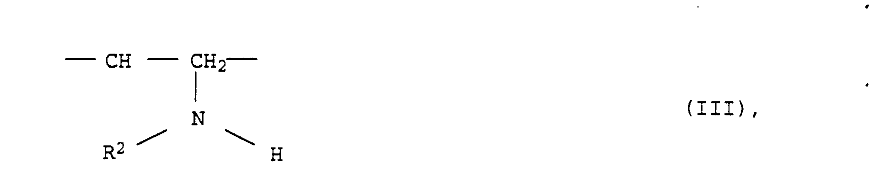 in der R² = H oder C₁- bis C₆-Alkyl ist, umgewandelt. Hierbei werden Einheiten der Formel 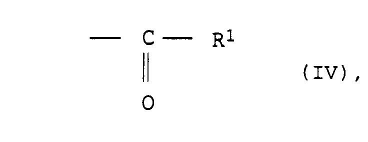 in der R¹ die in Formel II angegebene Bedeutung hat, aus den einpolymerisierten Monomeren (a) des Pfropfpolymerisats abspalten. In Abhängigkeit von den Reaktionsbedingungen bei der Hydrolyse, d.h. der Menge an Säure oder Base, bezogen auf das zu hydrolysierende Polymerisat, und der Reaktionstemperatur bei der Hydrolyse erhält man entweder eine partielle oder vollständige Hydrolyse der Einheiten der Formel (II). Die Hydrolyse der Pfropfpolymerisate wird so weit geführt, daß 2 bis 100 % der in den Pfropfpolymerisaten enthaltenen Monomereinheiten der Formel (II), vorzugsweise 30 bis 95 % dieser Einheiten hydrolysiert sind. Zur Hydrolyse setzt man den in der ersten Verfahrensstufe hergestellten Pfropfpolymerisaten mindestens eine Säure oder Base zu. Geeignete Säuren sind beispielsweise Mineralsäuren, wie Halogenwasserstoff (gasförmig oder in wäßriger Lösung), Schwefelsäure, Salpetersäure, Phosphorsäure (ortho-, meta- oder Polyphosphorsäure) und organische Säuren, z.B. C₁- bis C₅-Carbonsäuren, wie Ameisensäure, Essigsäure und Propionsäure oder die aliphatischen oder aromatischen Sulfonsäuren, wie Methansulfonsäure, Benzolsulfonsäure oder Toluolsulfonsäure. Vorzugsweise verwendet man zur Hydrolyse Salzsäure oder Schwefelsäure. Bei der Hydrolyse mit Säuren beträgt der pH-Wert 0 bis 5. Pro Formylgruppenäquivalent im Polymerisat benötigt man beispielsweise 0,05 bis 1,5 Äquivalente an Säure, vorzugsweise 0,4 bis 1,2.

Bei der Hydrolyse mit Basen können Metallhydroxide von Metallen der ersten und zweiten Hauptgruppe des Periodischen Systems verwendet werden, beispielsweise eignen sich Lithiumhydroxid, Natriumhydroxid, Kaliumhydroxid, Calciumhydroxid, Strontiumhydroxid und Bariumhydroxid. Ebenso können aber auch Ammoniak und Alkylderivate des Ammoniaks verwendet werden, z.B. Alkyl- oder Arylamine z.B. Triethylamin, Monoethanolamin, Diethanolamin, Triethanolamin, Morpholin oder Anilin. Bei der Hydrolyse mit Basen beträgt der pH-Wert 8 bis 14. Die Basen können in festem, flüssigem oder gegebenenfalls auch in gasförmigem Zustand verdünnt oder unverdünnt eingesetzt werden. Vorzugsweise verwendet man als Basen für die Hydrolyse Ammoniak, Natronlauge oder Kalilauge. Die Hydrolyse im sauren oder im alkalischen pH-Bereich erfolgt z.B. bei Temperaturen von 30 bis 170, vorzugsweise 50 bis 120°C. Sie ist nach etwa 2 bis 8, vorzugsweise 3 bis 5 Stunden beendet. Nach diesen Reaktionszeiten erreicht man Hydrolysegrade der Einheiten der Formel (II) im Polymerisat von 1 bis 100 %. Besonders bewährt hat sich eine Verfahrensweise, bei der zur Hydrolyse die Basen oder Säuren in wäßriger Lösung zugesetzt werden. Nach der Hydrolyse führt man i.a. eine Neutralisation durch, so daß der pH-Wert der hydrolysierten Polymerlösung 2 bis 8, vorzugsweise 3 bis 7 beträgt. Die Neutralisation ist dann erforderlich, wenn ein Fortschreiten der Hydrolyse von teilweise hydrolysierten Polymerisaten vermieden oder verzögert werden soll. Die Hydrolyse kann auch mit Hilfe von Enzymen vorgenommen werden.

Besonders bevorzugt sind solche Pfropfpolymerisate, zu deren Herstellung als Monomer (A) N-Vinylformamid oder Monomergemische aus
(a) 10 bis 90 Gew.-% N-Vinylformamid und
(b) 90 bis 10 Gew.-% Vinylformiat und/oder Vinylacetat
eingesetzt und die anschließend einer Hydrolyse unterworfen werden, bei der aus dem Pfropfpolymerisat 1 bis 100 % der Formylgruppen des einpolymerisierten N-Vinylformamids unter Bildung von Einheiten der Formel III mit R²=H abgespalten werden. 2 bis 100% der Formiat- und/oder Acetatgruppen des einpolymerisierten Vinylformiats und/oder Vinylacetats werden unter Bildung von Einheiten der Formel 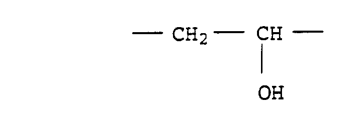 abgespalten. Bei der sauren Hydrolyse von Pfropfpolymerisaten, die neben N-Vinylformamid auch Acrynitril einpolymerisiert enthalten, können aus dem zuletzt genannten Monomer auch Imidstrukturen der Formel 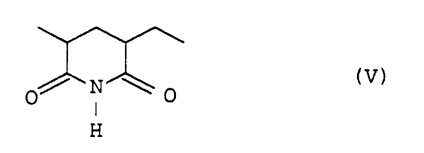 gebildet werden. Der Anteil dieser Strukturen im hydrolysiertem Pfropfpolymeren kann, je nach Menge des einpolymerisierten Acrylnitrils und Reaktionsbedingung bei 0 bis 60 mol% der Einheiten (V) betragen.

Die Hydrolyse mit Basen, insbesondere Metallhydroxiden führt dagegen zu weitgehender Bildung von Carboxylatfunktionen.

Um bei der Lagerung einen Wirksamkeitsabfall der hydrolysierten Pfropfpolymerisate bei der Anwendung zu verhindern bzw. weitgehend zurückzudrängen und um eine weitgehend farbstabile Polymerlösung zu erhalten, setzt man gegebenenfalls während oder nach der Hydrolyse Antioxidantien, Reduktionsmittel oder Aldehydfänger zu.

Antioxidantien, die meist als Radikalfänger oder UV-Stabilisatoren wirken, sind beispielsweise sekundäre aromatische Amine, Phenol, Alkylphenole, Thioether, Phosphite oder Mischungen von Verbindungen der genannten Stoffklassen. Geeignete sekundäre aromatische Amine sind beispielsweise 4,4'-Bis(tert.-butyl)diphenylamin, 4,4'-Bis(phenylmethyl)diphenylamin oder deren Gemische. Als Antioxidantien geeignete Alkylphenole sind z.B. 2,6-Dimethyl-4-tert.-butylphenol, 2,4,6-Trimethylphenol, 2,4-Ditert.-butyl-6-methylphenol oder deren Gemische. Als Thioether eigenen sich beispielsweise Dialkyl-3,3'-thiodipropionat, Poly-2,3-dimethylphenyl-1,4-disulfid, Bis(2-methyl-4-hydroxy-5-tert.-butyl)sulfid, Dibenzylsulfid und Dialkyldisulfide, wie z.B. Dioctadecyldisulfid.

Phosphite, die als Antioxidantien in Betracht kommen, sind beispielsweise Trisnonylphenylphosphit, Di-(2,4-di-tert.-butylphenyl)-pentaerythritoldiphosphit und Diphenylen-decylphosphit.

Als Reduktionsmittel eignen sich beispielsweise Natriumborhydrid, Natriumcyanoborhydrid und Dithionite, wie Natrium-, Kalium- oder Zinkdithionit.

Aldehydfänger sind beispielsweise NH-Gruppen aufweisende Verbindungen, wie Harnstoff, Ethylenharnstoff, Propylenharnstoff, Melamin, Guanidin, Phenylbiguanidin oder Mischungen der genannten Verbindungen. Andere Aldehydfänger sind z.B. Alkalimetallbisulfite, wie Natrium- oder Kaliumbisulfit.

Antioxidantien, Reduktionsmittel und Aldehydfänger werden jeweils in Mengen von 0,01 bis 20 Gew.-%, vorzugsweise 0,1 bis 16 Gew.-%, bezogen auf die Polymerisate, eingesetzt. Die Zugabe dieser Stoffe kann vor, während oder nach der Hydrolyse der in den Pfropfpolymerisaten enthaltenen Amidgruppen erfolgen.

Die so gewonnenen N-Vinylcarbonsäureamid- und/oder Vinylamin-Einheiten enthaltenden Pfropfpolymerisate werden bei der Herstellung von Papier zur Erhöhung der Trocken- und Naßfestigkeit des Papiers verwendet. Die erfindungsgemäßen Pfropfpolymerisate werden dabei vorzugsweise in wäßriger Lösung eingesetzt und dem Papierstoff vor der Blattbildung in einer Menge von 0,1 bis 10 Gew.-%, bezogen auf trockenen Faserstoff zugesetzt. Die wäßrigen Polymerlösungen können auch auf die Oberfläche des Papiers aufgetragen werden, wobei die anzuwendenden Mengen 0,1 bis 10, vorzugsweise 0,25 bis 3 Gew.-%, bezogen auf trockene Fasern, betragen. Die wäßrigen Lösungen der Polymerisate sind bei allen bekannten Papier-, Pappe- und Kartonqualitäten wirksam, z.B. bei der Herstellung von Hygiene-, Schreib-, Druck- und Verpackungspapieren. Die Papiere bzw. Pappen und Kartons können aus einer Vielzahl von Fasermaterialien hergestellt werden, beispielsweise aus Sulfit- oder Sulfat-Zellstoff (gebleicht oder ungebleicht, Holzschliff, chemo-thermomechanischem Stoff (CTMP), thermomechanischem Stoff (TMP) oder Altpapier oder Mischungen der genannten Faserarten bestehen). Der pH-Wert der Stoffsuspension beträgt 4 bis 9, vorzugsweise 6 bis 8. Die oben beschriebenen Copolymerisate werden vorzugsweise in einer Menge von 0,25 bis 2 Gew.-%, bezogen auf trockenen Faserstoff, der Papierstoffsuspension vor der Blattbildung zugesetzt und führen zu einer Erhöhung der Trocken- und Naßfestigkeit des Papiers.

Die Pfropfpolymerisate eignen sich außerdem als Fixiermittel für Störstoffe und Farbstoffe bei der Herstellung von Papier, Pappe und Karton. Für diesen Anwendungszweck werden die Pfropfpolymerisate dem Papierstoff direkt zugesetzt oder können auch in Form einer Mischung mit dem Harzleim dem Papierstoff zugefügt werden. Bezogen auf 100 Gew.-Teile Harzleim verwendet man z.B. 1 bis 100, vorzugsweise 5 bis 30 Gew.-Teile der Pfropfpolymerisate.

Pfropfpolymerisate, die ein hohes Molekulargewicht haben, z.B. K-Werte in dem Bereich von etwa 150 bis 250, werden als Retentions- und Entwässerungsmittel bei der Herstellung von Papier, Pappe und Karton verwendet. Für diesen Anwendungszweck kommen üblicherweise Mengen an Pfropfpolymerisaten von 0,01 bis 5, vorzugsweise 0,1 bis 2 Gew.-%, bezogen auf trokkenen Faserstoff, in Betracht. Ein weiteres Anwendungsgebiet für die erfindungsgemäßen Pfropfpolymerisate besteht in ihrem Einsatz als Stärkekationisierungsmittel. Um Stärke zu kationisieren geht man beispielsweise so vor, daß man eine wäßrige Aufschlämmung von Stärke auf Temperaturen von 80 bis 180°C in Gegenwart der Pfropfpolymerisate erhitzt. Bei Temperaturen oberhalb des Siedepunktes der wäßrigen Reaktionsmischungen arbeitet man in druckdichten verschlossenen Apparaturen. Bezogen auf Stärke verwendet man bei der Stärkekationisierung z.B. 0,1 bis 100 Gew.-%, vorzugsweise 1 bis 10 Gew.-% mindestens eines Pfropfpolymerisates. Man kann sämtliche Stärkesorten mit den erfindungsgemäßen Pfropfpolymerisaten kationisieren, z.B. native Stärken wie Kartoffel-, Reis-, Mais- und Weizenstärke, als auch abgebaute Stärken oder Stärkesorten mit Amylopektingehalten von mindestens 95 bis 100 %, z.B. Wachsmaisstärken oder Wachskartoffelstärken. Für diesen Anwendungszweck kommen insbesondere diejenigen Pfropfpolymerisate in Betracht, bei denen der Hydrolysegrad der einpolymerisierten N-Vinylcarbonsäureamide mindestens 60 % beträgt. Die so hergestellten kationisierten Stärken werden beispielsweise bei der Herstellung von Papier verwendet. Sie bewirken eine Erhöhung der Trocken- und Naßfestigkeit des Papiers und zeichnen sich gegenüber nicht modifizierter Stärke durch eine besonders hohe Retention aus.

Die erfindungsgemäßen Pfropfpolymerisate können außerdem als Dispergiermittel für Pigmente verwendet werden. Die hierfür üblichen Mengen betragen ca. 0,1 bis 5, vorzugsweise 0,5 bis 2 Gew.-%, bezogen auf die Pigmente. Geeignete Pigmente sind beispielsweise Kreide, Clay, Talkum und Titandioxid. Für die Anwendung als Füllstoff bei der Papierherstellung oder zur Herstellung von Papierstreichmassen werden hochkonzentrierte wäßrige Pigmentanschlämmungen hergestellt. Solche Pigmentanschlämmungen können bis zu 75 Gew.-% eines Pigments enthalten.

Die erfindungsgemäßen Pfropfpolymerisate eignen sich außerdem als Promoter bei der Diketenleimung von Papier, Pappe und Karton. Die Pfropfcopolymerisate werden für diesen Zweck bei der Herstellung der Diketenemulsion zusammen mit dem Diketen in Wasser emulgiert. Die Diketenemulsionen enthalten beispielsweise 0,05 bis 5 Gew.% eines Pfropfpolymerisats. Die erfindungsgemäßen Pfropfpolymerisate bewirken eine rasche Ausbildung der Diketenleimung. Die Pfropfpolymerisate sind außerdem als Hilfsmittel bei der Herstellung von Tissue-Papieren geeignet. Sie werden zu diesem Zweck in Mengen von 0,05 bis 0,5 Gew.-%, bezogen auf trocknen Faserstoff angewendet.

Die in den folgenden Beispielen angegebenen Teile sind Gewichtsteile, die Prozentangaben beziehen sich auf das Gewicht der Stoffe.

Die K-Werte der Polymerisate wurden nach H. Fikentscher, Cellulose-Chemie, Band 13, 58 bis 64 und 71 bis 74 (1932) in 1 gew.-%iger wäßriger Lösung bei 25°C bestimmt.

Die Papierblätter wurden in einem Rapid-Köthen-Laborblattbildner hergestellt. Die Trockenreißlänge wurde gemäß DIN 53112, Blatt 1 und die Naßreißlänge gemäß DIN 53112, Blatt 2, bestimmt.

### Beispiel 1

In einem beheizbaren Reaktor, der mit Rührer, Rückflußkühler, Thermometer, Zulaufvorrichtungen, Stickstoffeinlaß- und auslaßvorrichtungen versehen ist, werden 829,5 g destilliertes Wasser, 1,27 g Phosphorsäure 75 %ig und 0,87 g 50 %ige Natronlauge sowie 33 g Polyethylenglykol mit Molgewicht 1500 eingefüllt und mit Phosphorsäure bzw. Natronlauge der pH-Wert der Mischung auf 6,5 eingestellt. Nun wird im schwachen Stickstoffstrom (10 1/Std) der Reaktorinhalt auf 70°C erhitzt und 134,7 g N-Vinylformamid innerhalb von 3 Std. und eine Lösung von 0,53 g 2,2'-Azobis-(2-methylpropionamidin)dihydrochlorid in 100 g destilliertem Wasser innerhalb von 4 Std. gleichmäßig zudosiert. Anschließend wird noch 2 Std. bei 70°C nacherhitzt. Die klare, farblose viskose Lösung hat einen Feststoffgehalt von 15,5 % und einen K-Wert von 79.

### Hydrolyse:

In einer Rührapparatur mit Rückflußkühler, Thermometer und Tropftrichter werden 500 g der vorstehend beschriebenen Lösung des Pfropfpolymeren vorgelegt. Unter intensivem Rühren werden im Verlauf von 15 min 103 g 38 %ige Salzsäure zugetropft. Das Reaktionsgemisch wird daraufhin 6 h lang auf 70°C erhitzt. Der Umsatz wird durch Polyelektrolyttitration bestimmt. Nach dem Abkühlen auf Raumtemperatur wird durch langsames Zutropfen von insgesamt 77,6 g 50 %iger wäßriger Natronlauge ein pH-Wert von 3,8 eingestellt. Man versetzt die Lösung mit 11 g 30%iger Natriumbisulfitlösung und läßt 10 min lang nachrühren. Hydrolysegrad des einpolymerisierten N-Vinylformamids: 91 %, Feststoffgehalt: 21,8 %, Polymergehalt: 12,2 %.

### Beispiel 2

In einem Reaktor gemäß Beispiel 1 werden 831 g destilliertes Wasser, 0,96 wäßrige 75 %ige Phosphorsäure, 0,66 g 50 %ige wäßrige Natronlauge und 66 g Polyethylenglykol mit Molgewicht 1500 eingefüllt und auf einen pH-Wert von 6,5 wie bei Beispiel 1 eingestellt. Nun wird im schwachen Stickstoffstrom (10 1/Std.) auf 70°C erhitzt und 101 g N-Vinylformamid innerhalb von 3 Std. und eine Lösung von 0,4 g 2,2'-Azobis-(2-methylpropionanidin)dihydrochlorid in 100 g destilliertem Wasser innerhalb von 4 Std. bei 70°C gleichmäßig zudosiert. Anschließend wird nach 2 Std. bei 70°C nacherhitzt. Die klare, farblose Lösung hat einen Feststoffgehalt von 15,1 %. Der K-Wert des Pfropfpolymeren beträgt 62,3.

### Hydrolyse:

In einer Rührapparatur mit Rückflußkühler, Thermometer und Tropftrichter werden 500 g der vorstehend beschriebenen Lösung des Pfropfpolymeren vorgelegt. Unter intensivem Rühren werden im Verlauf von 10 min 74,8 g 38 %ige Salzsäure zugetropft. Die Lösung wird daraufhin 6 h lang auf 70°C erhitzt. Der Umsatz wird durch Polyelektrolyttitration bestimmt. Nach dem Abkühlen auf Raumtemperatur stellt man durch portionsweisen Zusatz von 56 g 50 %iger wäßriger Natronlauge einen pH-Wert von 3,8 ein. Man setzt 10,6 g 30 %ige Natriumbisulfitlösung zu und läßt noch 10 min lang nachrühren. Man erhält 641,4 g einer wäßrigen Lösung eines hydrolysierten Pfropfpolymeren. Der Hydrolysegrad des einpolymerisierten N-Vinylformamids beträgt 85 %. Die Lösung hat einen Feststoffgehalt von 20 % und einen Polymergehalt: 12,5 %.

### Beispiel 3

Beispiel 1 wird mit der einzigen Ausnahme wiederholt, daß man anstelle des dort verwendeten Polyethylenglykols mit einer Molmasse von 1500 jetzt ein Polyethylenglykol mit einer Molmasse von 4000 einsetzt. Man erhält eine klare, farblose Lösung mit einem Feststoffgehalt von 16,4 %. Der K-Wert des Polymeren beträgt 79,7.

### Hydrolyse:

500 g der oben beschriebenen Lösung des Pfropfpolymerisats werden wie in Beispiel 1 beschrieben mit 108 g 38%iger Salzsäure hydrolyisiert. Nach dem Abkühlen fügt man 73,4 g 50%ige wäßrige Natronlauge zu, wodurch sich ein pH-Wert von 3,8 einstellt. Man gibt außerdem 11,3 g einer 30%igen wäßrigen Natriumbisulfitlösung zu, um das Pfropfpolymerisat zu stabilisieren. Der Hydrolysegrad des einpolymerisierten N-Vinylformamids beträgt 90 %. Die entstehende Reaktionslösung hat einen Feststoffgehalt von 22 %. Der Polymergehalt beträgt 12,9.

### Beispiel 4

Man verfährt wie in Beispiel 1 beschrieben, verwendet jedoch als Pfropfgrundlage ein Methylpolyglykol mit einem Molgewicht von 500. Man erhält eine klare, farblose Lösung mit einem Feststoffgehalt von 10,4 %. Das Pfropfpolymerisat hat einen K-Wert von 77,6.

### Hydrolyse:

500 g der oben beschriebenen wäßrigen Polymerlösung werden wie in Beispiel 1 beschrieben durch Zugabe von 102 g 38%iger Salzsäure hydrolysiert. Nach dem Abkühlen des Reaktionsgemisches fügt man zur Einstellung des pH-Wertes 76,9 g 50%ige wäßrige Natronlauge und 11 g einer 30%igen wäßrigen Natriumbisulfitlösung zu. Die so erhaltene Lösung hat einen Feststoffgehalt von 21,7 % und enthält 12,1 % Polymer. Der Hydrolysegrad des einpolymerisierten N-Vinylformamids beträgt 94 %.

### Beispiel 5

Beispiel 2 wird mit der Ausnahme wiederholt, daß man als Pfropfgrundlage Methylpolyglykol mit einer Molmasse von 500 einsetzt. Man erhält eine klare, farblose Polymerisatlösung mit einem Feststoffgehalt von 15,8 %. Das Pfropfpolymerisat hat einen K-Wert von 70,7.

### Hydrolyse:

Nach der in Beispiel 1 gegebenen Vorschrift behandelt man 500 g der oben angegebenen Polymerlösung mit 781 g 38 %iger Salzsäure. Nach der Hydrolyse fügt man zur Einstellung des pH-Wertes 58,5 g 50 %iger wäßriger Natronlauge und 11 g 30%iger Natriumbisulfitlösung zur Stabilisierung zu. Der Feststoffgehalt der so erhaltenen Lösung beträgt 20,8 %, der Polymergehalt 13 %. Das einpolymerisierte N-Vinylformamid ist zu 87 % hydrolysiert.

### Beispiel 6

In dem in Beispiel 1 beschriebenen Reaktor werden 859 g destilliertes Wasser, 1,0 g 75%iger Phosphorsäure, 0,74 g 50%ige Natronlauge, 22,3 g Polyethylenglykol mit einem Molgewicht von 1500 und 90,9 g N-Vinylformamid vorgelegt und auf einen pH-Wert von 6,5 eingestellt. Die Reaktionsmischung wird in einem schwachen Stickstoffstrom unter Rühren auf eine Temperatur von 50°C erhitzt und fortlaufend gerührt. Innerhalb von 8 Std. gibt man - aufgeteilt in 8 Portionen - eine Lösung von 0,44 g 2,2'-Azobis-(2-methylpropionamidin)dihydrochlorid gelöst in 150 g Wasser in gleichmäßigen Abständen zu und hält die Temperatur des Reaktionsgemisches auf 50°C. Nach der Zugabe des Initiators wird das Reaktionsgemisch noch 4 Std. bei 75°C gerührt. Die so erhaltene klare farblose Lösung hat einen Feststoffgehalt von 10,1 %. Der K-Wert des Pfropfpolymeren beträgt 108,8 (gemessen in 0,5 %iger wäßriger Lösung).

### Hydrolyse:

500 g der oben beschriebenen Polymerlösung werden gemäß der in Beispiel 1 beschrieben Vorschrift durch Zugabe von 66,6 g 38%iger Salzsäure hydrolysiert. Nach der Hydrolyse fügt man 50,2 g 50%ige wäßrige Natronlauge und 10,1 g 30%ige Natriumbisulfitlösung zu. Man erhält eine wäßrige Lösung mit einem Feststoffgehalt von 15,8 %. Der Polymergehalt der Lösung beträgt 8,8 %. Das einpolymerisierte N-Vinylformamid ist zu 95 % zu Vinylamineinheiten hydrolysiert.

### Beispiel 7

Beispiel 6 wird mit der einzigen Ausnahme wiederholt, daß man als Pfropfgrundlage jetzt ein Polyethylenglykol mit einer Molmasse von 4000 einsetzt. Die so erhältliche klare, farblose Lösung hat einen Feststoffgehalt von 10,1 %. Der K-Wert des Pfropfpolymerisats beträgt 107,3.

### Hydrolyse:

Nach der in Beispiel 1 angegebenen Vorschrift hydrolysiert man 500 g der wäßrigen Polymerlösung durch Zugabe von 66,7 g 38 %iger Salzsäure. Nach dem Abkühlen der Reaktionsmischung fügt man 45,8 g einer 50 %igen wäßrigen Natronlauge sowie 10,3 g einer 30 %igen wäßrigen Natriumbisulfitlösung zu. Man erhält eine Polymerlösung mit einem Feststoffgehalt von 15,8 %. Der Polymergehalt der Lösung beträgt 8,8 %. Das auf Polyethylenglykol gepfropfte N-Vinylformamid ist zu 90 % hydrolysiert.

### Beispiel 8

In dem in Beispiel 1 beschriebenen Reaktor werden 951 g destilliertes Wasser, 2,5 g 75%ige Phosphorsäure, 1,95 g 50%ige wäßrige Natronlauge und 39,2 g Polyethylenglykol einer Molmasse von 1500 vorgelegt und der pH-Wert wie in Beispiel 1 beschrieben auf 6,8 eingestellt. Die Lösung wird dann in schwachem Stickstoffstrom unter Rühren auf eine Temperatur von 70°C erhitzt. Sobald die Temperatur von 70°C erreicht ist, gibt man in separaten Zuläufen 160 g N-Vinylformamid innerhalb von 3 Std., eine wäßrige Lösung von 1,6 g 2-Mercaptoethanol in 50 g destilliertem Wasser innerhalb von 2,75 Std. und eine Lösung von 0,64 g 2,2'-Azobis(2-methylpropionamidin)dihydrochlorid in 160 g destillierten Wasser innerhalb von 4 Std. gleichmäßig zu. Nach Zugabe des Initiators wird das Reaktionsgemisch noch 2 Std. bei 70°C gerührt. Man erhält eine klare, farblose Polymerlösung mit einem Feststoffgehalt von 14,9 %. Das Pfropfpolymerisat hat einen K-Wert von 50,8 (gemessen in 1%iger wäßriger Lösung).

### Hydrolyse:

Nach der in Beispiel 1 gegebenen Vorschrift gibt man zu 500 g der oben beschriebenen wäßrigen Polymerlösung 98,3 g 38%ige Salzsäure. Nach der Hydrolyse fügt man zur Reaktionsmischung 68,5 g einer 50%igen wäßrigen Natronlauge und 11,2 g 30%ige Natriumbisulfitlösung. Man erhält eine wäßrige Lösung mit einem Feststoffgehalt von 21,7 % und einem Polymergehalt von 11,9 %. Das aufgepfropfte N-Vinylformamid ist zu 86 % hydrolysiert.

### Beispiel 9

Man verfährt wie in Beispiel 8 angegeben, setzt jedoch als Pfropfgrundlage Polyethylenglykol mit einem Molgewicht 4000 (Zahlenmittel) ein. Der Feststoffgehalt der klaren, farblosen Polymerisatlösung beträgt 15,9 %. Das Pfropfpolymerisat hat einen K-Wert von 56,1, gemessen in 1%iger wäßriger Lösung.

### Hydrolyse:

Nach der in Beispiel 1 aufgeführten Vorschrift fügt man zu 500 g der oben beschriebenen wäßrigen Polymerlösung 102,2 g 38%ige Salzsäure. Nach dem Abkühlen des Reaktionsgemisches setzt man 70,5 g einer 50%igen wäßrigen Natronlauge und 11,1 g einer 30%igen Natriumbisulfitlösung zu. Es resultiert eine wäßrige Lösung mit einem Feststoffgehalt von 22,4 %. Der Polymerisatgehalt der Lösung beträgt 12,3 %. Das auf Polyethylenglykol aufgepfropfte N-Vinylformamid ist zu 93 % hydrolysiert.

### Beispiel 10

In dem in Beispiel 1 beschriebenen Reaktor werden 951 g destilliertes Wasser, 2,5 g 75 %ige Phosphorsäure, 1,95 g 50%ige wäßrige Natronlauge und 78,4 g Polyethylenglykol mit einer Molmasse (Zahlenmittel) von 1500 vorgelegt und auf einen pH-Wert von 6,5 eingestellt. Die Lösung wird in einem schwachen Stickstoffstrom auf eine Temperatur von 70°C erhitzt. Sobald diese Temperatur erreicht ist, fügt man in getrennten Strömen innerhalb von 3 Std. 120 g N-Vinylformamid, eine Lösung von 1,2 g 2-Mercaptoethanol in 50 g destilliertem Wasser innerhalb von 2,75 Std. und eine Lösung von 0,48 g 2,2'-Azobis-(2-methylpropionamidin)dihydrochlorid in 100 g destilliertem Wasser innerhalb von 4 Std. gleichmäßig zu. Nach Beendigung der Initiatorzugabe wird das Reaktionsgemisch noch 2 Std. bei 70°C gerührt. Die so erhältliche klare, farblose Polymerisatlösung hat einen Feststoffgehalt von 14 %. Der K-Wert des Pfropfpolymerisates beträgt 44,4.

### Hydrolyse:

Nach der in Beispiel 1 angegebenen Vorschrift hydrolysiert man 500 g der oben beschriebenen wäßrigen Polymerlösung durch Zugabe von 69,2 g 38%iger Salzsäure. Nach der Hydrolyse gibt man 47,7 g einer 50%igen wäßrigen Natronlauge und 10,3 g einer 30%igen Natriumbisulfitlösung zu. Die anfallende wäßrige Lösung hat einen Feststoffgehalt von 19,6 % und einen Polymergehalt von 11,8 %. Das auf Polyethylenglykol gepfropfte N-Vinylformamid ist zu 83 % hydrolysiert.

### Beispiel 11

In dem in Beispiel 1 beschriebenen Reaktor werden 859 g destilliertes Wasser, 1,08 g 75 %ige Phosphorsäure, 0,74 g 50%ige wäßrige Natronlauge, 44,6 g Polyethylenglykol einer Molmasse von 1500 und 68,2 g N-Vinylformamid vorgelegt und auf einen pH-Wert von 6,8 eingestellt. Das Reaktionsgemisch wird anschließend im schwachen Stickstoffstrom auf eine Temperatur von 50°C erhitzt. Sobald die Temperatur erreicht ist, wird eine Lösung von 0,33 g 2,2'-Azobis-(2-methylpropionamidin)dihydrochlorid in 150 g destilliertem Wasser, die in 8 Portionen aufgeteilt ist innerhalb von 8 Stunden in gleichmäßigen Abständen zugesetzt. Anschließend fügt man auf einmal eine Lösung von 0,07 g 2,2'-Azobis(2-methylpropionamidin)dihydrochlorid in 75 g destilliertem Wasser zu und erhitzt das Reaktionsgemisch noch 4 Std. unter Rühren auf eine Temperatur von 75 °C. Die so erhältliche klare, farblose Lösung hat einen Feststoffgehalt von 10,1 %. Der K-Wert des Polymeren beträgt 91 (gemessen in 1%iger wäßriger Lösung).

### Hydrolyse:

500 g der oben beschriebenen Polymerlösung werden durch Zugabe von 49,9 g 38 %iger Salzsäure nach der in Beispiel 1 gegebenen Vorschrift hydrolysiert. Nach der Hydrolyse fügt man 37,1 g einer 50%igen wäßrigen Natronlauge, und 9,6 g einer 30 %igen Natriumbisulfitlösung zu. Es resultiert eine Lösung mit einem Feststoffgehalt von 15,7 %. Der Polymergehalt der Lösung beträgt 9 %. Das aufgepfropfte N-Vinylformamid ist zu 91 % hydrolysiert.

### Beispiel 12

Der in Beispiel 1 beschriebene Reaktor wird zusätzlich durch eine Wasserdampfdestillationsvorrichtung ergänzt. Man legt darin 550 g Methanol, 401 g destilliertes Wasser, 2,5 g 75 %ige wäßrige Phosphorsäure, 1,95 g 50 %ige wäßrige Natronlauge und 39,2 g Polypropylenglykol mit einem Molgewicht von 2000 vor und stellt den pH-Wert der wäßrigen Lösung auf 6,5 ein. Die Mischung wird unter Rühren in einem schwachen Stickstoffstrom auf eine Temperatur von 70°C erhitzt. Sobald diese Temperatur erreicht ist, fügt man innerhalb von 3 Std. 160 g N-Vinylformamid, separat davon eine Lösung von 1,6 g 2-Mercaptoethanol in 50 g destilliertem Wasser innerhalb von 2,7 Std. und getrennt davon eine Lösung von 0,64 g 2,2'-Azobis(2-methylpropionamidin)dihydrochlorid innerhalb von 4 Std. gleichmäßig zu. Nach Zugabe des Initiators wird das Reaktionsgemisch noch 2 Std. bei 70°C gerührt. Anschließend leitet man Wasserdampf in die Reaktionsmischung ein, bis die Innentemperatur 100°C beträgt. Dadurch wird das Methanol abdestilliert. Es resultiert eine weiße Dispersion mit einem Feststoffgehalt von 20,1 %.

### Hydrolyse:

500 g der oben beschriebenen Dispersion werden mit 132,7 g 38%iger Salzsäure versetzt und nach der in Beispiel 1 angegebenen Vorschrift hydrolysiert. Danach fügt man 97,6 g einer 50%igen wäßrigen Natronlauge und 11,9 g einer 30%igen wäßrigen Natriumbisulfitlösung zu. Man erhält eine wäßrige Lösung mit einem Feststoffgehalt von 25,9 %. Der Polymergehalt der Lösung beträgt 14,7 %. Das aufgepfropfte N-Vinylformamid ist zu 89 % hydrolysiert.

### Beispiel 13

In dem in Beispiel 1 beschriebenen Reaktor werden 829 g destilliertes Wasser, 1,27 g 75 %ige Phosphorsäure, 0,87 g 50%ige wäßrige Natronlauge und 49,5 g des Umsetzungsproduktes aus 1 Mol eines C₁₃-Oxoalkohols mit 20 Mol Ethylenoxid vorgelegt. Der pH-Wert der wäßrigen Lösung wird auf 6,7 eingestellt. Man erhitzt der Reaktorinhalt in einem schwachen Stickstoffstrom unter Rühren auf eine Temperatur von 70°C und dosiert bei dieser Temperatur 117,9 g N-Vinylformamid innerhalb von 3 Std. und separat davon eine Lösung von 0,46 g 2,2'-Azobis-(2-methylpropionamidin)dihydrochlorid innerhalb von 4 Std. zu. Nach Zugabe des Initiators wird das Reaktionsgemisch noch 2 Std. bei 70°C gerührt. Es entsteht eine stark trübe Lösung mit einem Feststoffgehalt von 15 %.

### Hydrolyse:

500 g der oben beschriebenen Lösung werden durch Zugabe von 86,7 g 38 %iger Salzsäure nach der in Beispiel 1 gegebenen Vorschrift hydrolysiert. Nach dem Abkühlen fügt man 60,1 g einer 50%igen wäßrigen Natronlauge und 8,1 g einer 30 %igen Natriumbisulfitlösung zu. Es resultiert eine wäßrige Lösung mit einem Feststoffgehalt von 19,9 %. Der Polymergehalt der Lösung beträgt 12,2 %. Das aufgepfropfte N-Vinylformamid ist zu 80 % hydrolysiert.

### Beispiel 14

In dem in Beispiel 1 beschriebenen Reaktor werden 829 g destilliertes Wasser, 1,27 g 75 %ige wäßrige Phosphorsäure, 0,87 g 50%ige wäßrige Natronlauge, 0,25 g Polyvinylpyrrolidon von K-Wert 90 und 66 g Polyethylenglykol vom Molgewicht 1500 vorgelegt, auf einen pH-Wert von 6,7 eingestellt und unter einem schwachen Stickstoffstrom und unter Rühren auf eine Temperatur von 70°C erhitzt. Sobald der Reaktorinhalt diese Temperatur erreicht hat, dosiert man innerhalb von 2 Std. eine Mischung aus 50,5 g N-Vinylformamid und 49,5 g Acrylnitril und getrennt davon eine Lösung von 0,4 g 2,2'-Azobis-(2-methylpropionamidin)dihydrochlorid in 100 g destilliertem Wasser innerhalb von 4 Std. gleichmäßig zu. Man erhält eine 15%ige grobe Polymerisatsuspension des Pfropfpolymeren.

### Hydrolyse:

500 g der oben beschriebenen Polymersuspension werden in einer mit einem Rührer ausgestatteten Apparatur vorgelegt und innerhalb von 10 min mit 37,4 g 38%iger Salzsäure versetzt. Die Suspension wird 8 Std. bei einer Temperatur von 70°C gerührt. Danach läßt man das Reaktionsgemisch abkühlen, und stellt mit Zugabe von 83,0 g 25%iger wäßriger Natronlauge einen pH-Wert von 3,0 ein. Anschließend gibt man noch 9,3 g einer 30%igen wäßrigen Natriumbisulfitlösung zu und rührt das Reaktionsgemisch noch 15 min. Es hat einen Feststoffgehalt von 16,9 % und einen Polymergehalt von 12,4 %. Der Hydrolysegrad des einpolymerisierten N-Vinylformamids beträgt 90 %.

### Beispiel 15

In dem in Beispiel 1 beschriebenen Reaktor werden 395 g destilliertes Wasser, 2,62 g 75 %ige wäßrige Phosphorsäure, 1,8 g 50%ige wäßrige Natronlauge, 1,44 g der wäßrigen Natriumsalzlösung eines molaren Copolymeren aus Maleinsäure und Styrol vom Molgewicht 150 000 und 75,6 g Polyethylenglykol vom Molgewicht 1500 vorgelegt und auf einen pH-Wert von 6,5 eingestellt. Die Mischung wird anschließend in einem schwachen Stickstoffstrom unter Rühren auf eine Temperatur von 65°C erhitzt und bei dieser Temperatur innerhalb von 2 Std. mit 34 g Vinylacetat, separat davon innerhalb von 3 Std. mit 81 g N-Vinylformamid und ebenfalls getrennt davon mit einer Lösung von von 0,25 g 2,2'-Azobis-(2-methylpropionamidin)dihydrochlorid innerhalb von 4 Std. gleichmäßig versetzt. Während der Polymerisation wird das Reaktionsgemisch hochviskos. Man verdünnt es daher mit 300 g destilliertem Wasser. Nach Zugabe des Initiators wird das Reaktionsgemisch noch 2 Std. bei 65°C gerührt, dann auf einmal mit einer Lösung von 0,05 % 2,2'-Azobis-(2-methylpropionamidin)dihydrochlorid in 1 g destilliertem Wasser versetzt. Man erhöht dann innerhalb von 4 Std. die Temperatur des Reaktionsgemisches auf 98°C und kühlt die Reaktionslösung dann ab. Man erhält eine klare, farblose Lösung mit einem Feststoffgehalt von 18,9 %. Das Polymerisat hat einen K-Wert von 67,0.

### Hydrolyse:

500 g der oben beschriebenen Polymerisatlösung werden nach der in Beispiel 1 angegebenen Vorschrift durch Zusatz von 65,4 g 38%iger Salzsäure hydrolysiert. Nach der Hydrolyse fügt man 45,2 g einer 50%igen wäßrigen Natronlauge und 7,5 g einer 30%igen wäßrigen Natriumbisulfitlösung zu. Das Reaktionsgemisch hat einen Feststoffgehalt von 22 % und einen Polymergehalt von 15,5 %. Der Hydrolysegrad des einpolymerisierten N-Vinylformamids beträgt 95 %, der des einpolymerisierten Vinylacetats 35 %.

### Beispiel 16

In der in Beispiel 12 beschriebenen Apparatur werden 550 g Methanol, 401 destilliertes Wasser, 2,5 g 75%ige Phosphorsäure, 1,95 g 50%ige wäßrige Natronlauge und 39,2 g Polytetrahydrofuran vom Molgewicht 650 vorgelegt und der pH-Wert der Lösung auf 6,5 eingestellt. Die Lösung wird dann in einem schwachen Stickstoffstrom unter Rühren auf eine Temperatur von 70°C erhitzt. sobald diese Temperatur erreicht ist, dosiert man 160 g N-Vinylformamid innerhalb von 3 Std. und separat davon eine Lösung von 0,64 g 2,2'-Azobis-(2-methylpropionamidin)dihydrochlorid in 150 g destilliertem Wasser innerhalb von 4 Std. gleichmäßig zu. Danach wird das Reaktionsgemisch noch 2 Std. bei 70°C gerührt. Man leitet dann Wasserdampf bis zu einer Innentemperatur von 100°C ein, um das Methanol abzudestillieren. Die so erhältliche weiße Dispersion hat einen Feststoffgehalt von 19,2 %.

### Hydrolyse:

500 g der oben beschriebenen Dispersion werden durch Zugabe von 126,0 g 38%iger Salzsäure nach der in Beispiel 1 angegebenen Vorschrift hydrolysiert. Nach der Hydrolyse fügt man 85,6 g 50 %ige wäßrige Natronlauge und 11,8 g 30 %ige Natriumbisulfitlösung zu. Es resultiert eine Dispersion mit einem Feststoffgehalt von 24,4 %. Der Polymergehalt beträgt 14,4 %. Das aufgepfropfte N-Vinylformamid hat einen Hydrolysegrad von 88 %.

### Beispiel 17

In dem Beispiel 1 beschriebenen Reaktor werden 829 g destilliertes Wasser, 1,27 g 75 %ige Phosphorsäure, 0,87 g 50 %ige wäßrige Natronlauge und 33 g Polypropylenglykol vom Molgewicht 600 vorgelegt und auf einen pH-Wert von 6,7 eingestellt. Die Lösung wird in einem schwachen Stickstoffstrom unter Rühren auf eine Temperatur von 70°C erhitzt. Bei dieser Temperatur fügt man innerhalb von 3 Std. 134,6 g N-Vinylformamid und separat davon 0,53 g 2,2'-Azobis-(2-methylpropionamidin)dihydrochlorid gelöst in 100 g destilliertem Wasser innerhalb von 4 Std. gleichmäßig zu. Nach Zugabe des Initiators wird das Reaktionsgemisch noch 2 Std. bei 70°C gerührt. Es resultiert eine fast klare, farblose Lösung mit einem Feststoffgehalt von 15,3 %.

### Hydrolyse:

500 g der oben beschriebenen Lösung werden durch Zusatz von 109 g 38%iger Salzsäure nach der in Beispiel 1 gegebenen Vorschrift hydrolysiert. Nach der Hydrolyse setzt man 68,7 g 50 %ige wäßrige Natronlauge und 11,1 g 30 %ige Natriumbislulfitlösung zu. Es resultiert eine Lösung mit einem Feststoffgehalt von 20,9 % und einem Polymergehalt von 12,2 %. Der Hydrolysegrad des aufgepfropften N-Vinylformamids beträgt 92 %.

### Beispiel 18

In dem in Beispiel 1 beschriebenen Reaktor werden 829 g destilliertes Wasser, 1,27 g 75 %ige Phosphorsäure, 0,87 g 50 %ige wäßrige Natronlauge und 66,5 g Polypropylenglykol vom Molgewicht 600 vorgelegt und auf einen pH-Wert von 6,7 eingestellt. Die Lösung wird in einem schwachen Stickstoffstrom unter Rühren auf eine Temperatur von 70°C erhitzt. Sobald diese Temperatur erreicht ist, dosiert man innerhalb von 3 Std. 101 g N-Vinylformamid und separat davon eine Lösung von 0,3 g 2,2'-Azobis-(2-methylpropionamidin)dihydrochlorid in 100 g destilliertem Wasser innerhalb von 4 Std. gleichmäßig zu. Danach versetzt man das Reaktionsgemisch mit einer Lösung von 0,1 g 2,2'-Azobis-(2-methylpropionamidin)dihydrochlorid in 10 g destilliertem Wasser und erhitzt es noch 2 Std. auf 70°C. Man erhält eine farblose, schwachtrübe Lösung mit einem Feststoffgehalt von 14,8 %.

### Hydrolyse:

500 g der oben beschriebenen Lösung werden durch Zugabe von 73,1 g 33%iger Salzsäure nach der in Beispiel 1 angegebenen Vorschrift hydrolysiert. Nach der Hydrolyse setzt man 51,0 g 50 %ige wäßrige Natronlauge und 10,5 g 30 %ige Natriumbisulfitlösung zu. Es resultiert eine Lösung mit einem Feststoffgehalt von 19,8 % und einem Polymergehalt von 12,4 %. Der Hydrolysegrad des aufgepfropften N-Vinylformamids beträgt 89 %.

### Vergleichsbeispiele

### Polymer 1

Zu 300 g einer 15,3 %igen wäßrigen Polyvinylformamidlösung, (K-Wert des Polymeren beträgt 85) werden 74 g 38 %ige Salzsäure (120 Mol-%, bezogen auf N-Vinylformamid) getropft. Darauf erhitzt man das Gemisch ca. 5 Std. lang auf 70°C. Der Hydrolysegrad (> 93 %) wird durch Polyelektrolyttitration kontrolliert. Nach Abkühlung wird der pH-Wert der Lösung mit 50 %iger Natronlauge (40,6 g) auf 3,5 erhöht. Der Polymergehalt der Lösung beträgt 10,9 Gew.-%.

### Polymer 2

Zu 500 g einer 15 %igen wäßrigen Polyvinylformamidlösung (K-Wert 85) wurden 32 g Kartoffelstärke zugemischt. Nach vollständiger Einmischung der Stärke tropft man innerhalb von 10 min. 121 g (120 Mol-%, bezogen auf N-Vinylformamid) 38 %ige Salzsäure zu, läßt dann noch 15 min lang bei Raumtemperatur rühren und erhitzt schließlich 6 Std. lang auf 70°C. Der Reaktionsendpunkt (Hydrolysegrad 95 %) wird durch Polyelektrolyttitration bestimmt. Man erhält eine klare bräunliche Lösung mit einem Wirkstoffgehalt von 16,4 Gew.-%, die gemäß der Lehre der EP-A-0 301 372 als Trocken- und Naßverfestigungsmittel für Papier verwendet wird.

### Polymer 3

Ein Copolymerisat aus 70 Gew.-% N-Vinylformamid und 30 Gew.-% Vinylacetat mit einem K-Wert von 85 wird gemäß den Angaben in der US-A-4 978 427 hergestellt und durch Zugabe von 110 mol einer 38 %igen Salzsäure pro Mol N-Vinylformamid-Anteil im Polymerisat soweit hydrolysiert, daß mindestens 90 % des einpolymerisierten N-Vinylformamids und mindestens 80 % des einpolymerisierten Vinylacetats hydrolysiert sind.

### Anwendungstechnische Beispiele

### Beispiel 19

In einem Rapid-Köthen-Blattbildner werden Blätter mit einem Flächengewicht von 80 g/m² hergestellt. Der Papierstoff bestand aus 50 % gebleichtem Laubholzsulfit- und 50 % gebleichtem Nadelholzsulfitzellstoff mit einem Mahlgrad von 32°SR (Schopper-Riegler) in 0,5 %iger wäßriger Suspension. Der pH-Wert der Stoffsuspension betrug 7,0. Die Stoffsuspension wurde in 22 gleiche Teile geteilt. Zu 21 Proben wurden die unter (b) bis (v) angegebenen Stoffe zugesetzt:
(a) Die Stoffsuspension enthielt keine weiteren Zusätze.
(b) Die Stoffsuspension wurde mit 1 %, bezogen auf trockenen Faserstoff, einer wäßrigen Lösung eines handelsüblichen Neutralnaßfestharzes auf Basis eines Umsetzungsproduktes von Epichlorhydrin und einem Polyamidoamin aus Diethylentriamin und Adipinsäure zugesetzt.
(c) Der Stoffsuspension wurde 1 %, bezogen auf trockenen Faserstoff, einer wäßrigen Lösung eines Polyvinylaminhydrochlorids mit einem K-Wert von 85 gemäß Vergleichsbeispiel 1 zugesetzt.
(d) Der Stoffsuspension wurde 1 %, bezogen auf trockenen Faserstoff, einer wäßrigen Polymerlösung gemäß Vergleichsbeispiel 2 zugesetzt.
(e) bis (v)
   Der Stoffsuspension wurde jeweils 1 %, bezogen auf trokkenen Faserstoff, der hydrolysierten Pfropfpolymeren gemäß den Beispielen 1 bis 18 zugesetzt.

Die erhaltenen Pulpen wurden anschließend auf einem Rapid-Köthen-Blattbildner zu Blättern mit einer Flächenmasse von 80 g/m² entwässert. Für die oben angegebenen Polymeren wurden dabei die in Tabelle 1 angegebenen Trocken- und Naßreißlängen gemessen.

**Tabelle 1**

| Zusatz | | Naßreißlänge [m] ungealtert | Naßreißlänge [m] gealtert* | Trockenreißlänge [m] |
|---|---|---|---|---|
| a) | ohne Polymer | 116 | 121 | 2376 |
| b) | Vergleich | 68 | 837 | 2910 |
| c) | " | 754 | 812 | 2932 |
| d) | " | | 449 | 2456 |
| e) | erfindungsgemäß | 753 | 804 | 3640 |
| f) | " | 652 | 675 | 3883 |
| g) | " | 685 | 724 | 3936 |
| h) | " | 765 | 845 | 3715 |
| i) | " | 695 | 772 | 3687 |
| j) | " | 840 | 858 | 3944 |
| k) | " | 813 | 843 | 4068 |
| l) | " | 662 | 697 | 3720 |
| m) | " | 684 | 665 | 3886 |
| n) | " | 562 | 622 | 3753 |
| o) | " | 687 | 742 | 3246 |
| p) | " | 682 | 693 | 3709 |
| q) | " | 801 | 799 | 3681 |
| r) | " | 576 | 552 | 3446 |
| s) | " | 650 | 628 | 3717 |
| t) | " | 707 | 739 | 3816 |
| u) | " | 660 | 677 | 3808 |
| v) | " | 689 | 752 | 3864 |

| | | | | |
|---|---|---|---|---|
| * 5 min bei 110°C | | | | |

### Beispiel 20

In einem Rapid-Köthen-Blattbildner werden Blätter mit einem Flächengewicht von 80 g/m² hergestellt. Der Papierstoff bestand aus 50 % gebleichtem Laubholzsulfit- und 50 % gebleichtem Nadelholzsulfitzellstoff mit einem Mahlgrad von 32°SR (Schopper-Riegler) in 0,5 %iger wäßriger Suspension. Der pH-Wert der Stoffsuspension betrug 4,5. Die Stoffsuspension wurde in 21 gleiche Teile geteilt. Zu 20 Proben wurden die unter (d) bis (v) angegebenen Stoffe zugesetzt:
(a) Die Stoffsuspension enthielt keine weiteren Zusätze.
(b) Die Stoffsuspension wurde mit 1 %, bezogen auf trockenen Faserstoff, einer wäßrigen Lösung eines handelsüblichen Naßfestharzes auf Basis eines Umsetzungsproduktes von Harnstoff/Melamin mit Formaldehyd zugesetzt.
(c) Der Stoffsuspension wurde 1 %, bezogen auf trockenen Faserstoff, einer wäßrigen Lösung eines Copolymeren aus Vinylaminhydrochlorid und Vinylalkohol gemäß Vergleichsbeispiel 3 zugesetzt.
(d) bis (u)
   Der Stoffsuspension wurde jeweils 1 %, bezogen auf trokkenen Faserstoff, der hydrolysierten Propfpolymeren zugesetzt, die gemäß den Beispielen 1 bis 18 erhalten wurden, wobei man bei (d) das hydrolysierte Pfropfpolymerisat gemäß Beispiel 1 und bei (u) das nach Beispiel 18 hergestellte hydrolysierte Pfropfpolymerisat einsetzte.

Die erhaltenen Pulpen wurden anschließend auf einem Rapid-Köthen-Blattbildner zu Blättern mit einer Flächenmasse von 80 g/m² entwässert. Für die oben angegebenen Polymeren wurden dabei die in Tabelle 2 angegebenen Trocken- und Naßreißlängen gemessen.

**Tabelle 2**

| zusatz | | Naßreißlänge [m] ungealtert | Naßreißlänge [m] gealtert* | Trockenreißlänge [m] |
|---|---|---|---|---|
| a) | ohne Zusatz | 149 | 170 | 2376 |
| b) | Vergleich | 531 | 645 | 3710 |
| c) | " | 599 | 607 | 4089 |
| d) | erfindungsgemäß | 607 | 698 | 4562 |
| e) | " | 606 | 596 | 3913 |
| f) | " | 649 | 655 | 3543 |
| g) | " | 558 | 620 | 3819 |
| h) | " | 441 | 601 | 3965 |
| i) | " | 533 | 657 | 4183 |
| j) | " | 585 | 613 | 3924 |
| k) | " | 430 | 488 | 3736 |
| l) | " | 479 | 500 | 3189 |
| m) | " | 433 | 468 | 3655 |
| n) | " | 529 | 564 | 3652 |
| o) | " | 507 | 547 | 4554 |
| p) | " | 614 | 597 | 4453 |
| q) | " | 675 | 835 | 4826 |
| r) | " | 596 | 625 | 3600 |
| s) | " | 559 | 558 | 3565 |
| t) | " | 585 | 566 | 3362 |
| u) | " | 615 | 571 | 3746 |

| | | | | |
|---|---|---|---|---|
| * 5 min bei 110°C | | | | |

## Patentansprüche

1. Pfropfpolymerisate aus Alkylenoxideinheiten enthaltenden Polymerisaten und ethylenisch ungesättigten Verbindungen, wobei sie erhältlich sind durch radikalisch initiierte Polymerisation von
(A) Monomeren oder Monomergemischen aus
(a) 10 bis 100 Gew.-% N-Vinylcarbonsäureamiden der Formel 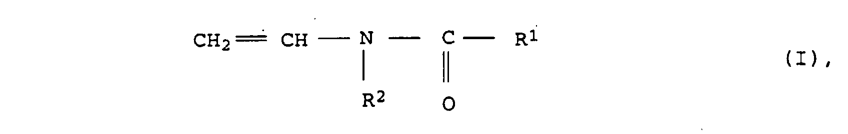 in der R¹, R²=H und C₁- bis C₆-Alkyl bedeuten,
(b) 0 bis 90 Gew.-% anderen, mit den Monomeren (a) copolymerisierbaren monoethylenisch ungesättigten Monomeren und
(c) 0 bis 5 Gew.-% mindestens zwei ethylenisch ungesättigten, nicht konjugierte Doppelbindungen im Molekül aufweisenden Monomeren
in Gegenwart von
(B) Homo- oder Copolymerisaten von C₂- bis C₄-Alkylenoxiden, wobei die Polymerisate mindestens 3 Einheiten eines C₂- bis C₄-Alkylenoxids enthalten, und/oder Polytetrahydrofuranen im Gewichtsverhältnis (A):(B) von (95 bis 10):(5 bis 90) und anschließende zumindest teilweise Abspaltung der Gruppierung 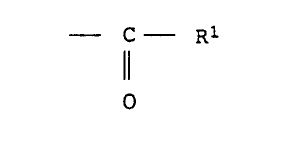 aus den einpolymerisierten Monomeren (a) des Pfropfpolymerisats unter Bildung von Einheiten der Formel

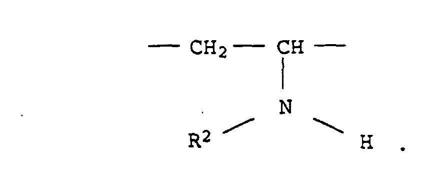

2. Pfropfpolymerisate nach Anspruch 1, **dadurch gekennzeichnet, daß** als Monomer (A) N-Vinylformamid eingesetzt wird und daß aus dem Pfropfpolymerisat 1 bis 100 % der Formylgruppen des einpolymerisierten N-Vinylformamids unter Bildung von Einheiten der Formel 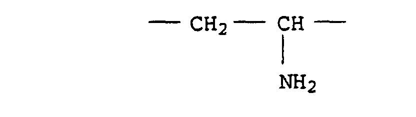 abgespalten werden.

3. Pfropfpolymerisate nach Anspruch 1, **dadurch gekennzeichnet, daß** als (A) Monomergemische aus
(a) 10 bis 90 Gew.-% N-Vinylformamid und
(b) 90 bis 10 Gew.-% Vinylformiat und/oder Vinylacetat
eingesetzt werden und daß aus dem Pfropfpolymerisat 1 bis 100 % der Formylgruppen des einpolymerisierten N-Vinylformamids unter Bildung von Einheiten der Formel 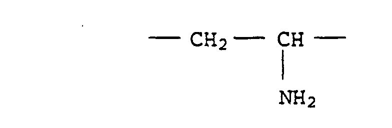 und 2 bis 100 % der Formiat- und/oder Acetatgruppen des einpolymerisierten Vinylformiats und/oder Vinylacetats unter Bildung von Einheiten der Formel 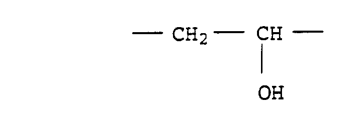 abgespalten werden.

4. Pfropfpolymerisate nach Anspruch 2, **dadurch gekennzeichnet, daß** aus dem Pfropfpolymerisat 30 bis 95 % der Formylgruppen abgespalten werden.

5. Pfropfpolymerisate nach Anspruch 3, **dadurch gekennzeichnet, daß** aus dem Pfropfpolymerisat 30 bis 95 % der Formylgruppen und 30 bis 95 % der Formiat- und/oder Acetatgruppen abgespalten werden.

6. Verfahren zur Herstellung von Pfropfpolymerisaten aus Alkylenoxideinheiten enthaltenden Polymerisaten und ethylenisch ungesättigten Verbindungen, **dadurch gekennzeichnet, daß** man
(A) Monomere oder Monomergemische aus
(a) 10 bis 100 Gew.-% N-Vinylcarbonsäureamiden der Formel 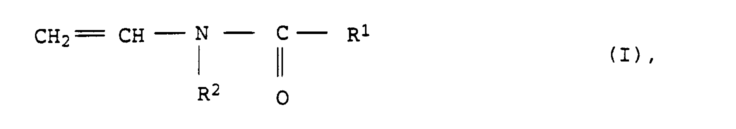 in der R¹, R²=H und C₁- bis C₆-Alkyl bedeuten,
(b) 0 bis 90 Gew.-% anderen, mit den Monomeren (a) copolymerisierbaren monoethylenisch ungesättigten Monomeren und
(c) 0 bis 5 Gew.-% mindestens zwei ethylenisch ungesättigten, nicht konjugierte Doppelbindungen im Molekül aufweisenden Monomeren
in Gegenwart von
(B) Homo- oder Copolymerisaten von C₂- bis C₄-Alkylenoxiden, wobei die Polymerisate mindestens 3 Einheiten eines C₂- bis C₄-Alkylenoxids enthalten, und/oder Polytetrahydrofuranen im Gewichtsverhältnis (A):(B) von (95 bis 10):(5 bis 90) radikalisch polymerisiert durch Suspensions- oder Lösungspolymerisation der Komponenten (A) und (B) in wäßrigem Medium und anschließend die Gruppierung 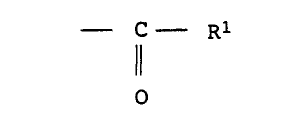 aus den einpolymerisierten Monomeren (a) des Pfropfpolymerisats zumindest teilweise unter Bildung von Einheiten der Formel 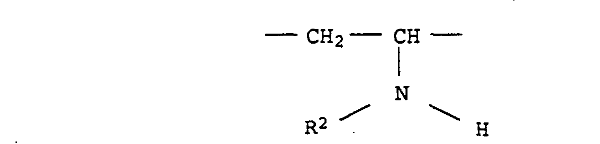 abspaltet.

7. Verfahren nach Anspruch 6, **dadurch gekennzeichnet, daß** als Monomer (A) N-Vinylformamid eingesetzt wird und daß aus dem Pfropfpolymerisat 1 bis 100 % der Formylgruppen des einpolymerisierten N-Vinylformamids unter Bildung von Einheiten der Formel 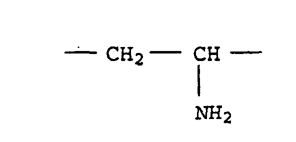 abgespalten werden.

8. Verfahren zur Herstellung von Pfropfpolymerisaten nach Anspruch 6, **dadurch gekennzeichnet, daß** als (A) Monomergemische aus
(a) 10 bis 90 Gew.-% N-Vinylformamid und
(b) 90 bis 10 Gew.-% Vinylformiat und/oder Vinylacetat
eingesetzt werden und daß aus dem Pfropfpolymerisat 1 bis 100 % der Formylgruppen des einpolymerisierten N-Vinylformamids unter Bildung von Einheiten der Formel 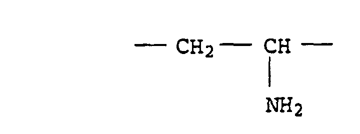 und 2 bis 100 % der Formiat- und/oder Acetatgruppen des einpolymerisierten Vinylformiats und/oder Vinylacetats unter Bildung von Einheiten der Formel 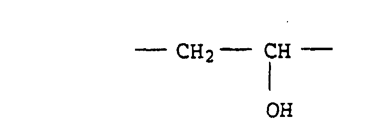 abgespalten werden.

9. Verwendung der Pfropfpolymerisate nach einem der Ansprüche 1 bis 5, als Trocken- und Naßverfestigungsmittel bei der Herstellung von Papier, Pappe und Karton.

10. Verwendung der Pfropfpolymerisate nach einem der Ansprüche 1 bis 5, als Fixiermittel für Störstoffe und Farbstoffe bei der Herstellung von Papier, Pappe und Karton.

11. Verwendung der Pfropfpolymerisate nach einem der Ansprüche 1 bis 5, als Retentions- und Entwässerungsmittel bei der Herstellung von Papier, Pappe und Karton.

12. Verwendung der Pfropfpolymerisate nach einem der Ansprüche 1 bis 5 als Stärkekationisierungsmittel.

13. Verwendung der Pfropfpolymerisate nach einem der Ansprüche 1 bis 5 als Dispergiermittel für Pigmente.

14. Verwendung der Pfropfpolymerisate nach einem der Ansprüche 1 bis 5, als Promoter bei der Diketenleimung von Papier, Pappe und Karton.

15. Verwendung der Pfropfpolymerisate nach einem der Ansprüche 1 bis 5 als Hilfsmittel bei der Herstellung von Tissuepapieren.

## Claims

1. A graft polymer comprising polymers, containing alkylene oxide units, and ethylenically unsaturated compounds, wherein the graft polymers are obtainable by free radical polymerization of
(A) monomers or monomer mixtures comprising
(a) from 10 to 100% by weight of N-vinylcarboxamides of the formula 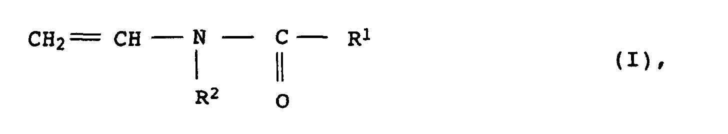 where R¹ and R² are each H or C₁-C₆-alkyl,
(b) from 0 to 90% by weight of other monoethylenically unsaturated monomers copolymerizable with the monomers (a) and
(c) from 0 to 5% by weight of monomers having at least two ethylenically unsaturated, nonconjugated double bonds in the molecule
in the presence of
(B) homo- or copolymers of C₂-to C₄-alkylene oxides, wherein the polymers contain at least 3 units of a C₂-C₄-alkylene oxide, or polytetrahydrofurans, in a weight ratio (A):(B) of (95 to 10):(5 to 90), and subsequent elimination of some or all of the group 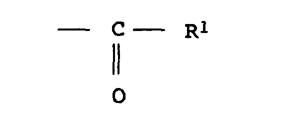 from the polymerized monomers (a) of the graft polymer with formation of units of the formula

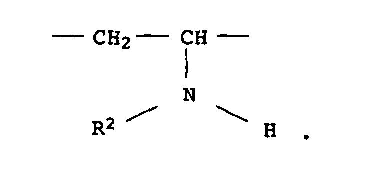

2. A graft polymer as claimed in claim 1, wherein N-vinylformamide is used as monomer (A) and from 1 to 100% of the formyl groups of the polymerized N-vinylformamide are eliminated from the graft polymer with formation of units of the formula

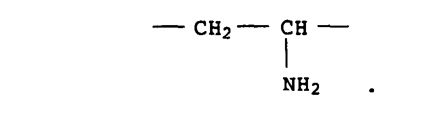

3. A graft polymer as claimed in claim 1, wherein a monomer mixture comprising
(a) from 10 to 90% by weight of N-vinylformamide and
(b) from 90 to 10% by weight of vinyl formate or vinyl acetate
is used as (A) and from 1 to 100% of the formyl groups of the polymerized N-vinylformamide are eliminated from the graft polymer with formation of units of the formula 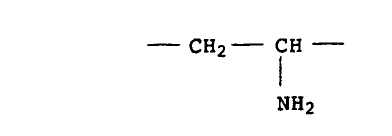 and from 2 to 100% of the formate and/or acetate groups of the polymerized vinyl formate and/or vinyl acetate are eliminated from the graft polymer with formation of units of the formula

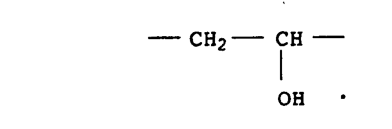

4. A graft polymer as claimed in claim 2, wherein from 30 to 95% of the formyl groups are eliminated from the graft polymer.

5. A graft polymer as claimed in claim 3, wherein from 30 to 95% of the formyl groups and from 30 to 95% of the formate and/or acetate groups are eliminated from the graft polymer.

6. A process for the preparation of a graft polymer comprising polymers, containing alkylene oxide units, and ethylenically unsaturated compounds, wherein
(A) monomers or monomer mixtures comprising
(a) from 10 to 100% by weight of N-vinylcarboxamides of the formula 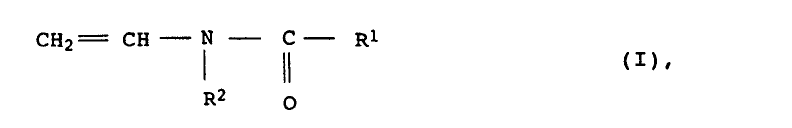 where R¹ and R² are each H or C₁-C₆-alkyl,
(b) from 0 to 90% by weight of other monoethylenically unsaturated monomers copolymerizable with the monomers (a) and
(c) from 0 to 5% by weight of monomers having at least two ethylenically unsaturated, nonconjugated double bonds in the molecule
are subjected to free radical polymerization in the presence of
(B) homo- or copolymers of C₂- to C₄-alkylene oxides, wherein the polymers contain at least 3 units of C₂-C₄-alkylene oxide or polytetrahydrofuran in a weight ratio (A):(B) of (95 to 10):(5 to 90) by suspension or solution polymerization of components (A) and (B) in an aqueous medium, and some or all of the groups 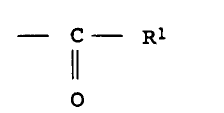 are then eliminated from the polymerized monomers (a) of the graft polymer with formation of units of the formula

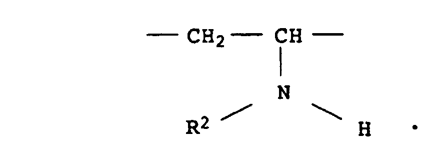

7. A process as claimed in claim 6, wherein N-vinylformamide is used as monomer (A) and from 1 to 100% of the formyl groups of the polymerized N-vinylformamide are eliminated from the graft polymer with formation of units of the formula

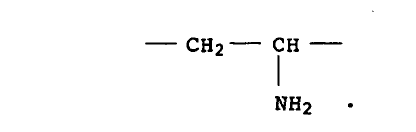

8. A process for the preparation of a graft polymer as claimed in claim 6, wherein a monomer mixture comprising
(a) from 10 to 90% by weight of N-vinylformamide and
(b) from 90 to 10% by weight of vinylformate and/or vinyl acetate
is used as (A) and from 1 to 100% of the formyl groups of the polymerized N-vinylformamide are eliminated from the graft polymer with the formation of units of the formula 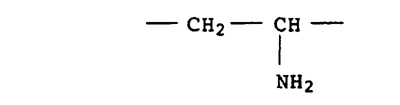 and from 2 to 100% of the formate and/or acetate groups of the polymerized vinyl formate and/or vinyl acetate are eliminated from the graft polymer with formation of units of the formula

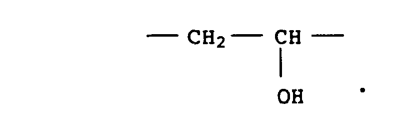

9. The use of graft polymer as claimed in any of claims 1 to 5 as a dry or wet strength agent in the production of paper, board and cardboard.

10. The use of a graft polymer as claimed in any of claims 1 to 5 as a fusing agent for interferring substances and dyes in the production of paper, board and cardboard.

11. The use of a graft polymer as claimed in any of claims 1 to 5 as a retention or drainage aid in the production of paper, board and cardboard.

12. The use of a graft polymer as claimed in any of claims 1 to 5 as a starch cationizing agent.

13. The use of a graft polymer as claimed in any of claims 1 to 5 as a dispersant for pigments.

14. The use of a graft polymer as claimed in any of claims 1 to 5 as a promoter in the diketene sizing of paper, board and cardboard.

15. The use of a graft polymer as claimed in any of claims 1 to 5 as an assistant in the production of tissue papers.

## Revendications

1. Polymères greffés constitués de polymères contenant des unités d'oxyde d'alkylène et de composés éthyléniquement insaturés, qui peuvent être obtenus par polymérisation à initiation radicalaire de:
(A) monomères ou mélanges de monomères constitués de:
(a) 10 à 100% en poids d'amides d'acide N-vinylcarboxylique de la formule 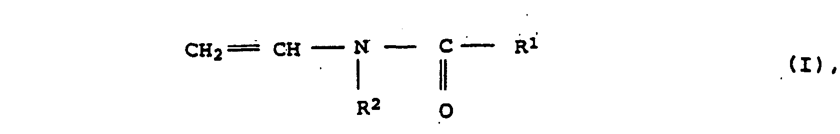 dans laquelle R¹, R² = H et alkyle en C₁ à C₆,
(b) de 0 à 90% en poids d'autres monomères monoéthyléniquement insaturés, copolymérisables avec les monomères (a), et
(c) de 0 à 5% en poids d'au moins deux monomères éthyléniquement insaturés, présentant dans leur molécule des doubles liaisons non conjuguées, en présence de
(B) des homo- ou des copolymères d'oxydes d'alkylène en C₂ à C₄, les polymères contenant au moins 3 unités d'un oxyde d'alkylène en C₂ à C₄, et/ou du polytétrahydrofuranne en proportion pondérale (A) : (B) de (95 à 10) : (5 à 90), et scission au moins partielle subséquente du groupement 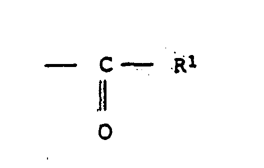 des monomères copolymérisés (a) du polymère greffé avec formation d'unités de la formule

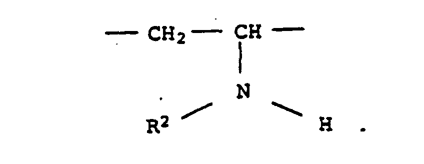

2. Polymères greffés selon la revendication 1, **caractérisés en ce que** l'on met en oeuvre comme monomère (A) du vinylformamide et qu'on sépare du polymère greffé 1 jusqu'à 100% des groupes formyle du N-vinylformamide copolymérisé avec formation d'unités de la formule

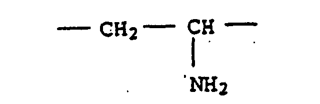

3. Polymères greffé selon la revendication 1, **caractérisés en ce que** l'on met en oeuvre pour (A) des mélanges de monomères constitués de
(a) 10 à 90% en poids de N-vinylformamide et
(b) 90 à 10% en poids de formiate de vinyle et/ou d'acétate de vinyle, et que l'on sépare du polymère greffé 1 jusqu'à 100% des groupes formyle du N-vinylformamide copolymérisé avec formation d'unités de la formule 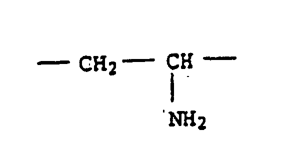 et de 2 à 100% des groupes formiate et/ou acétate du formiate de vinyle et/ou de l'acétate de vinyle copolymérisé(s), avec formation d'unités de la formule

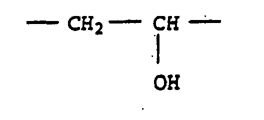

4. Polymères greffés selon la revendication 2, **caractérisés en ce que** l'on sépare du polymère greffé de 30 à 95% des groupes formyle.

5. Polymères greffés selon la revendication 3, **caractérisés en ce que** l'on sépare du polymère greffé de 30 à 95% des groupes formyle et de 30 à 95% des groupes formiate et/ou acétate.

6. Procédé de polymérisation de polymères greffés constitués de polymères contenant des unités d'oxyde d'alkylène et de composés éthyléniquement insaturés, **caractérisé en ce que** l'on polymérise par voie radicalaire, par polymérisation en suspension ou en solution des composants (A) et (B) en milieu aqueux:
(A) des monomères ou des mélanges de monomères constitués de:
(a) 10 à 100% en poids d'amides d'acide N-vinylcarboxylique de la formule 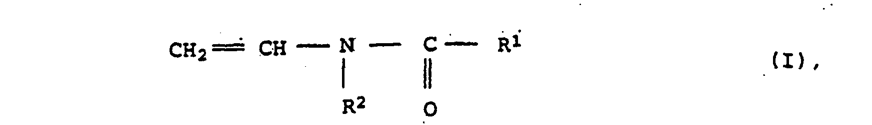 dans laquelle R¹, R² = H et alkyle en C₁ à C₆,
(b) de 0 à 90% en poids d'autres monomères monoéthyléniquement insaturés, copolymérisables avec les monomères (a), et
(c) de 0 à 5% en poids d'au moins deux monomères éthyléniquement insaturés, présentant dans leur molécule des doubles liaisons non conjuguées, en présence de
(B) des homo- ou des copolymères d'oxydes d'alkylène en C₂ à C₄, les polymères contenant au moins 3 unités d'un oxyde d'alkylène en C₂ à C₄, et /ou du polytétrahydrofuranne en proportion pondérale (A) : (B) de (95 à 10) : (5 à 90), et que l'on sépare ensuite au moins en partie le groupement 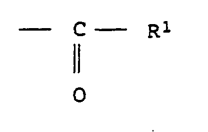 des monomères copolymérisés (a) du polymère greffé avec formation d'unités de la formule

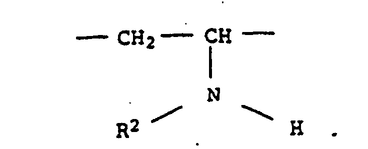

7. Procédé selon la revendication 6, **caractérisé en ce que** l'on met en oeuvre en tant que monomère (A) du N-vinylformamide et que l'on sépare du polymère greffé de 1 à 100% des groupes formyle du N-vinylformamide copolymérisé avec formation d'unités de la formule

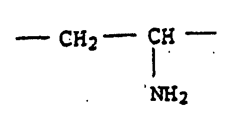

8. Procédé de préparation de polymères greffés selon la revendication 6, **caractérisé en ce que** l'on met en oeuvre pour (A) des mélanges de monomères constitués de
(a) 10 à 90% en poids de N-vinylformamide et
(b) 90 à 10% en poids de formiate de vinyle et/ou d'acétate de vinyle, et que l'on sépare du polymère greffé 1 jusqu'à 100% des groupes formyle du N-vinylformamide copolymérisé avec formation d'unités de la formule 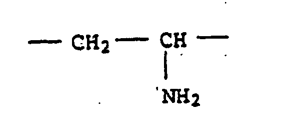 et de 2 à 100% des groupes formiate et/ou acétate du formiate de vinyle et/ou de l'acétate de vinyle copolymérisé(s), avec formation d'unités de la formule

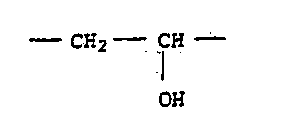

9. Utilisation des polymères greffés selon l'une des revendications 1 à 5 comme agents de renforcement à l'état sec et mouillé dans la fabrication de papier, de carton-pâte et de carton.

10. Utilisation des polymères greffés selon l'une des revendications 1 à 5, comme agents de fixation de substances perturbatrices et de colorants dans la fabrication de papier, de carton-pâte et de carton.

11. Utilisation des polymères greffés selon l'une des revendications 1 à 5, comme agents de rétention et de déshydratation dans la fabrication de papier, de carton-pâte et de carton.

12. Utilisation des polymères greffés selon l'une des revendications 1 à 5 comme agents de cationisation d'amidons.

13. Utilisation des polymères greffés selon l'une des revendications 1 à 5 comme agents de dispersion pour pigments.

14. Utilisation des polymères greffés selon l'une des revendications 1 à 5 comme promoteurs du collage dicétène de papier, de carton-pâte et de carton.

15. Utilisation des polymères greffés selon l'une des revendications 1 à 5 comme adjuvants dans la préparation de papier de soie.
